# EUROPEAN PATENT APPLICATION

(11) **EP 4 610 784 A1**
(43) Date of publication of application: **03.09.2025**
(21) Application number: 23882508.7
(22) Date of filing: 18.10.2023
(51) Int. Cl.: G06F 3/01, G06F 3/04815

(54) **INFORMATION PROCESSING DEVICE AND INFORMATION PROCESSING METHOD**

(30) Priority: 24.10.2022 US 202263418768 P
(71) Applicant: Sony Group Corporation, Tokyo 108-0075 (JP)
(72) Inventor: YUASA, Hiroshi, Tokyo 108-0075 (JP); YONEDA, Masafumi, Tokyo 108-0075 (JP); ISHIKAWA, Tsuyoshi, Tokyo 108-0075 (JP); YAMANO, Ikuo, Tokyo 108-0075 (JP); FUKUMA, Yohei, Tokyo 108-0075 (JP); ISHIKAWA, Yuri, Tokyo 108-0075 (JP)
(74) Representative: D Young & Co LLP
(86) International application number: PCT/JP2023/037689
(87) International publication number: WO 2024/090303

(57) **Abstract**

The present technology relates to an information processing apparatus and an information processing method that improve workability in a cross reality (XR) space.

An information processing apparatus includes: a recognition unit that recognizes a state of an element related to XR; and a space control unit that controls physical laws applied to a virtual object in an XR space on the basis of the state of the element related to XR. The present technology can be applied to, for example, an XR system.

## Description

### TECHNICAL FIELD

The present technology relates to an information processing apparatus and an information processing method, and more particularly, to an information processing apparatus and an information processing method capable of improving workability in a cross reality (XR) space.

### BACKGROUND ART

Conventionally, a technology of detecting a gravity direction in a real space and reflecting the detected gravity direction in a virtual space has been proposed (see, for example, Patent Document 1).

### CITATION LIST

### PATENT DOCUMENT

Patent Document 1: Japanese Patent Application Laid-Open No. 2011-197777

### SUMMARY OF THE INVENTION

### PROBLEMS TO BE SOLVED BY THE INVENTION

For example, in a case where a line design of a factory is performed using three-dimensional CAD, in order to consider arrangement of parts that are virtual objects, a user may want to place the virtual parts at arbitrary positions (for example, in the air or the like) in a virtual space. On the other hand, in the invention described in Patent Document 1, the gravity direction is reflected in the virtual space, and thus the workability of the user may be rather deteriorated.

The present technology has been made in view of such a situation, and is intended to improve workability in an XR space.

### SOLUTIONS TO PROBLEMS

An information processing apparatus according to one aspect of the present technology includes: a recognition unit that recognizes a state of an element related to XR; and a space control unit that controls physical laws applied to a virtual object in an XR space on the basis of the state of the element related to the XR.

In an operation control method according to one aspect of the present technology, an information processing apparatus recognizes a state of an element related to XR, and controls physical laws applied to a virtual object in an XR space on the basis of the state of the element related to the XR.

In one aspect of the present technology, a state of an element related to XR is recognized, and physical laws applied to a virtual object in an XR space is controlled on the basis of the state of the element related to XR.

### BRIEF DESCRIPTION OF DRAWINGS

Fig. 1 is a diagram illustrating an embodiment of an XR system to which the present technology is applied.
Fig. 2 is a diagram illustrating a display example of the XR system.
Fig. 3 is a diagram illustrating a display example of the XR system.
Fig. 4 is a block diagram illustrating a configuration example of an information processing apparatus and a terminal apparatus.
Fig. 5 is an external view illustrating a configuration example of a controller device.
Fig. 6 is a diagram illustrating a method of grasping the controller device.
Fig. 7 is a diagram illustrating a method of grasping the controller device.
Fig. 8 is a diagram illustrating a method of grasping the controller device.
Fig. 9 is a diagram illustrating an arrangement example of operation members of the controller device.
Fig. 10 is a diagram illustrating an arrangement example of markers of the controller device.
Fig. 11 is a diagram illustrating an example of how the markers appear on the controller device.
Fig. 12 is a diagram for explaining a method of recognizing a position and an orientation of the controller device.
Fig. 13 is a diagram illustrating an example of an internal configuration of the controller device.
Fig. 14 is a diagram illustrating an arrangement example of a tactile device of the controller device.
Fig. 15 is a flowchart for explaining operation member control processing executed by the XR system.
Fig. 16 is a diagram for explaining the operation member control processing executed by the XR system.
Fig. 17 is a diagram illustrating an example of a method of grasping the controller device.
Fig. 18 is a diagram illustrating an example of a method of grasping the controller device.
Fig. 19 is a diagram illustrating an example of a method of grasping the controller device.
Fig. 20 is a flowchart for explaining tactile feedback control processing executed by the XR system.
Fig. 21 is a diagram for explaining an example of tactile feedback.
Fig. 22 is a diagram for explaining an example of the tactile feedback.
Fig. 23 is a diagram for explaining an example of the tactile feedback.
Fig. 24 is a schematic diagram of a site of a line in a real world.
Fig. 25 is a diagram illustrating an example of a behavior of a virtual object in an XR space.
Fig. 26 is a flowchart for explaining virtual object behavior control processing executed by the XR system.
Fig. 27 is a table for comparing functions of a physical law OFF mode and a physical law ON mode.
Fig. 28 is a diagram illustrating an example of how to hold the controller device.
Fig. 29 is a diagram illustrating an example of how to hold the controller device.
Fig. 30 is a diagram illustrating an example of how to hold the controller device.
Fig. 31 is a diagram illustrating an arrangement example of a touch sensor and a button of the controller device.
Fig. 32 is a diagram illustrating an example of how to hold the controller device.
Fig. 33 is a diagram illustrating an example of how to hold the controller device.
Fig. 34 is a diagram illustrating an example of how to hold the controller device.
Fig. 35 is a diagram illustrating an arrangement example of a touch sensor and a button of a pen-shaped controller device.
Fig. 36 is a diagram for explaining an example of a behavior mode switching method.
Fig. 37 is a diagram illustrating an example of a method of presenting a virtual object.
Fig. 38 is a diagram for explaining an example in which the present technology is applied to product design.
Fig. 39 is a diagram for explaining an example in which the present technology is applied to surgery simulation.
Fig. 40 is a block diagram illustrating a configuration example of a computer.

### MODE FOR CARRYING OUT THE INVENTION

Hereinafter, modes for carrying out the present technology will be described. The description will be given in the following order.
1. Embodiment
2. Application example
3. Modifications
4. Others

### <<1. Embodiment>>

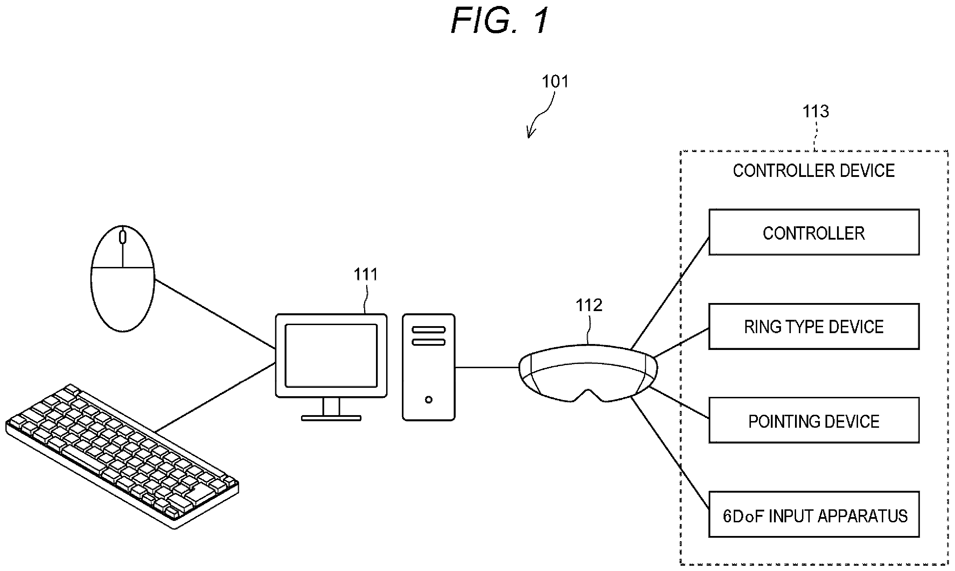

An embodiment of the present technology will be described with reference to Figs. 1 to 23.

### <Configuration example of XR system 101>

Fig. 1 illustrates a configuration example of a cross reality (XR) system 101 which is an embodiment of an information processing system to which the present technology is applied.

The XR system 101 is a system that realizes XR that is a technology of merging a real world with a virtual world, such as virtual reality (VR), augmented reality (AR), mixed reality (MR), and substitute reality (SR). The XR system 101 is a system that presents, to a user, a space (hereinafter, referred to as an XR space) obtained by merging a real space with a virtual space. For example, the XR system 101 can present a virtual object (hereinafter, referred to as a virtual object or a virtual entity) that is not real, such as a model created by computer aided design (CAD) (hereinafter, referred to as a CAD model), to the user as if the virtual object was present at that place.

The XR system 101 includes an information processing apparatus 111, a terminal apparatus 112, and a controller device 113.

The information processing apparatus 111 and the terminal apparatus 112 can communicate with each other wirelessly or by wire, and transmit and receive data to and from each other. The terminal apparatus 112 and the controller device 113 can communicate with each other wirelessly or by wire, and transmit and receive data to and from each other. The information processing apparatus 111 and the controller device 113 communicate with each other via the terminal apparatus 112, and transmit and receive data to and from each other.

For example, the information processing apparatus 111 can independently receive an operation by the user and present various types of information such as visual information and auditory information to the user.

Furthermore, for example, the information processing apparatus 111 executes a predetermined application (hereinafter, referred to as an XR application) to control the terminal apparatus 112 and control presentation of the XR space to the user by the terminal apparatus 112. For example, the information processing apparatus 111 executes the XR application to control output of various types of information such as visual information and auditory information in the terminal apparatus 112 and construct the XR space presented by the terminal apparatus 112.

Fig. 1 illustrates an example in which the information processing apparatus 111 includes a personal computer (PC) including an operation input unit including a mouse and a keyboard. For example, the information processing apparatus 111 may include another information processing apparatus such as a smartphone or a tablet terminal. For example, the information processing apparatus 111 may include a plurality of information processing apparatuses. For example, the information processing apparatus 111 may include a system constructed by cloud computing via a network.

The terminal apparatus 112 is an apparatus that presents the XR space to the user.

Fig. 1 illustrates an example in which the terminal apparatus 112 is a head mounted display apparatus that can be mounted on the head of the user and includes a head mounted display (HMD) that is an apparatus that presents the XR space to the user. More specifically, an example is illustrated in which the terminal apparatus 112 is a non-transmissive HMD that covers the user's field of view.

For example, the terminal apparatus 112 includes a video see-through type HMD that has an imaging function capable of imaging a real space on the basis of the viewpoint of the user and is capable of presenting, to the user, a combined image obtained by combining a real image obtained by imaging the real space and an image of a virtual space (hereinafter, referred to as a virtual image) such as computer graphics (CG).

For example, the terminal apparatus 112 includes left and right imaging units respectively corresponding to the left and right eyes of the user, and left and right display units respectively corresponding to the left and right eyes of the user.

For example, the left and right imaging units constitute a stereo camera, and capture images (hereinafter, referred to as visual field images) in a line-of-sight direction of the user from a plurality of viewpoints corresponding to the left and right eyes of the user. That is, each of the left and right imaging units captures an image of an object (hereinafter, referred to as a real object or a real entity) in the real space viewed from the viewpoint of the user.

The left and right display units can display different images for the left and right eyes, respectively, and can present a three-dimensional virtual object by displaying images with parallax for the left and right eyes. For example, the left and right display units display left and right visual field images captured by the left and right imaging units, respectively.

Note that the terminal apparatus 112 may include, for example, another XR terminal apparatus such as AR glasses or a smartphone set with goggles for use. Furthermore, for example, a display apparatus such as a spatial reproduction display may be used instead of the terminal apparatus 112.

The controller device 113 is used for an operation and an input (hereinafter, referred to as an operation input) with respect to the XR space presented to the user by the terminal apparatus 112. For example, the user can perform various operations on the virtual object displayed by the terminal apparatus 112 by using the controller device 113.

For example, the controller device 113 detects at least one of an operation input by the user or a behavior of the user (for example, a gesture) by at least one of an operation member such as a button or a sensor. The controller device 113 transmits a signal (hereinafter, referred to as a controller signal) including at least one of an operation input signal indicating an operation input of the user or a behavior signal indicating a behavior of the user to the information processing apparatus 111 via the terminal apparatus 112.

Furthermore, for example, a controller device 113a includes a tactile device that presents a tactile stimulus such as vibration, and presents the tactile stimulus to the user under the control of the information processing apparatus 111 or the terminal apparatus 112.

The controller device 113 includes, for example, one or more types of input device among a controller, a ring type input device, a pointing device, and a six degrees of freedom (6DoF) input apparatus.

The controller is, for example, an input device grasped by the user's hand. The controller may include, for example, an operation member such as a button operable by the user. For example, the user can perform a selection operation, a determination operation, a scroll operation, or the like on the virtual object displayed on the terminal apparatus 112 by pressing a button of the controller. Furthermore, the controller may include, for example, a touch sensor and a motion sensor.

Note that the controller is not limited to being grasped by the user's hand, and may be worn on a part of the user's body such as an elbow, an arm, a knee, an ankle, or a thigh, for example.

The ring type device is a ring type input device worn on the user's finger. The ring type device may include, for example, an operation member such as a button that is operable by the user. For example, the user can change the position and orientation of the virtual object (for example, a three-dimensional model) in the XR space by six degrees of freedom (6DoF) by operating the ring type device.

The pointing device is an input device capable of indicating an arbitrary position in the XR space. For example, the position and orientation of 6DoF of the pointing device are recognized by the information processing apparatus 111 via the terminal apparatus 112 by a tracking method such as a bright spot tracking method, a porcelain tracking method, or an ultrasonic tracking method.

The 6DoF input apparatus is, for example, an input device capable of operating 6DoF.

For example, the user can perform an operation input with the controller device 113 while viewing various objects (display objects) displayed on the information processing apparatus 111 or the terminal apparatus 112.

Note that the type and number of the controller devices 113 are not particularly limited. For example, as the controller device 113, an input device other than the above-described types may be used, or an input device obtained by combining a plurality of types of input devices may be used.

For example, the XR system 101 can be applied to various fields such as a manufacturing field and a medical field.

For example, the XR system 101 can perform product design support and assembly support in the manufacturing field. For example, in a product design stage, the user can freely edit a three-dimensional object, which is a virtual object, by using the XR system 101, or can grasp a design result and a design in advance before trial production by comparing with the real world.

For example, the XR system 101 can support surgery and education in the medical field. For example, the user can use the XR system 101 to display the internal state of the body on the body surface of a patient, whereby grasping a surgical site in advance or performing training.

Note that, for example, in a case where the XR space is shared by a plurality of users, for example, in the XR system 101, the terminal apparatus 112 and the controller device 113 are provided for each user.

### <Display example of XR system 101>

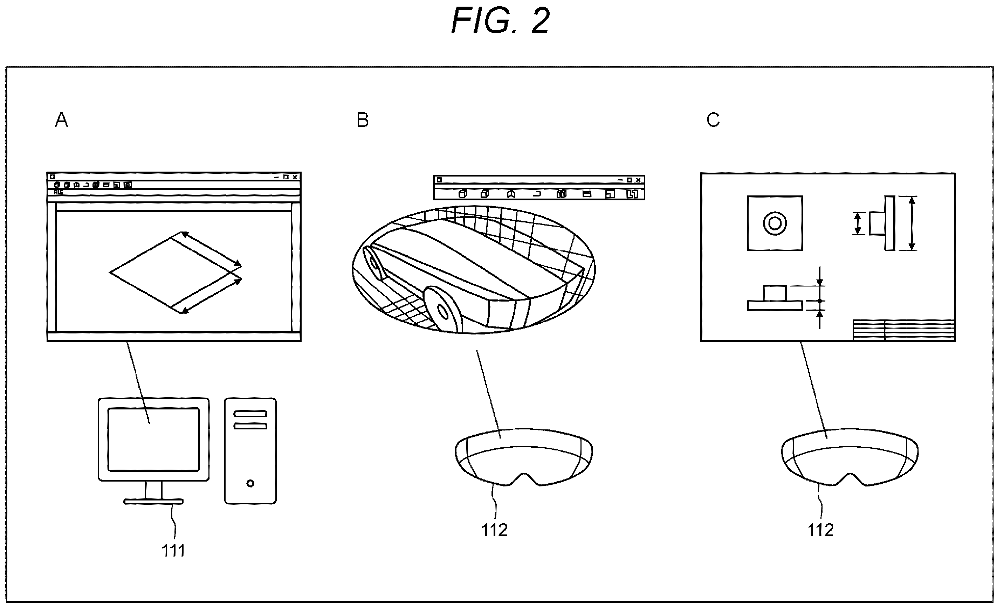

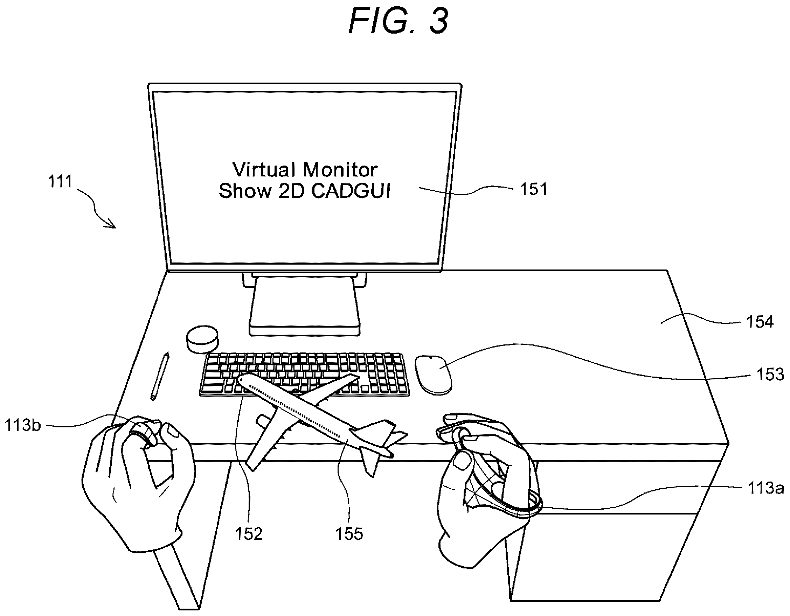

Here, a display example of display objects in the XR system 101 will be described with reference to Figs. 2 and 3.

Figs. 2and 3 illustrate display examples of display objects in the XR system 101 in a case where a CAD model is created.

For example, as illustrated in A oFigs. 2, a two-dimensional CAD model is displayed by the information processing apparatus 111, and the user can edit the two-dimensional CAD model.

For example, as illustrated in B ofFigs. 2, a three-dimensional CAD model is displayed by the terminal apparatus 112, and the user can edit the three-dimensional CAD model.

For example, as illustrated in C ofFigs. 2, a two-dimensional object such as a design drawing or a specification is displayed by the terminal apparatus 112, and the user can confirm the design drawing, the specification, or the like.

Fig. 3 illustrates a display example of the XR space by the terminal apparatus 112.

A display 151, a keyboard 152, a mouse 153, and a desk 154 of the information processing apparatus 111 are displayed as a video see-through by a real image obtained by imaging a real space. On the other hand, a two-dimensional image by the terminal apparatus 112 is superimposed on the display 151 as a virtual monitor. For example, a two-dimensional CAD model to be designed is displayed on the virtual monitor. For example, from the viewpoint of high accuracy of position detection and ease of position holding, the two-dimensional CAD model displayed by the virtual monitor is preferably operated by the keyboard 152 and the mouse 153.

Furthermore, in this example, the three-dimensional CAD model 155 to be designed is displayed in front of the display 151 by the terminal apparatus 112.

The CAD model 155 is operated by, for example, the controller device 113a grasped by the user's dominant hand (in this example, the right hand) and a controller device 113b, which is a ring type device worn on the index finger of the user's non-dominant hand (in this example, the left hand).

For example, the information processing apparatus 111 recognizes the positions, orientations, and behaviors of the hand grasping the controller device 113a and the user's hand wearing the controller device 113b by executing hand tracking on the basis of the image captured by the imaging unit included in the terminal apparatus 112. Furthermore, for example, the information processing apparatus 111 receives controller signals from the controller device 113a and the controller device 113b via the terminal apparatus 112, and recognizes operations on the CAD model 155 by the controller device 113a and the controller device 113b on the basis of the controller signals.

For example, the user can use the controller device 113a or the controller device 113b to grab, release, or move and rotate the CAD model 155 in 6DoF.

Note that, for example, in a case where the hand wearing the controller device 113a or the controller device 113b is moved without picking the CAD model 155, the CAD model 155 may not be moved, or the CAD model 155 may be moved as a virtual point is moved.

For example, the user can point at an arbitrary point, line, surface, or the like of the CAD model 155 by a ray (virtual light beam) or the like by using the controller device 113a. For example, the user can use the controller device 113a to perform line drawing to draw a line on the CAD model 155.

For example, the user can edit (for example, modeling, wiring, disassembly, and the like) the CAD model 155 by using the controller device 113a or the controller device 113b.

### <Configuration examples of information processing apparatus 111 and terminal apparatus 112>

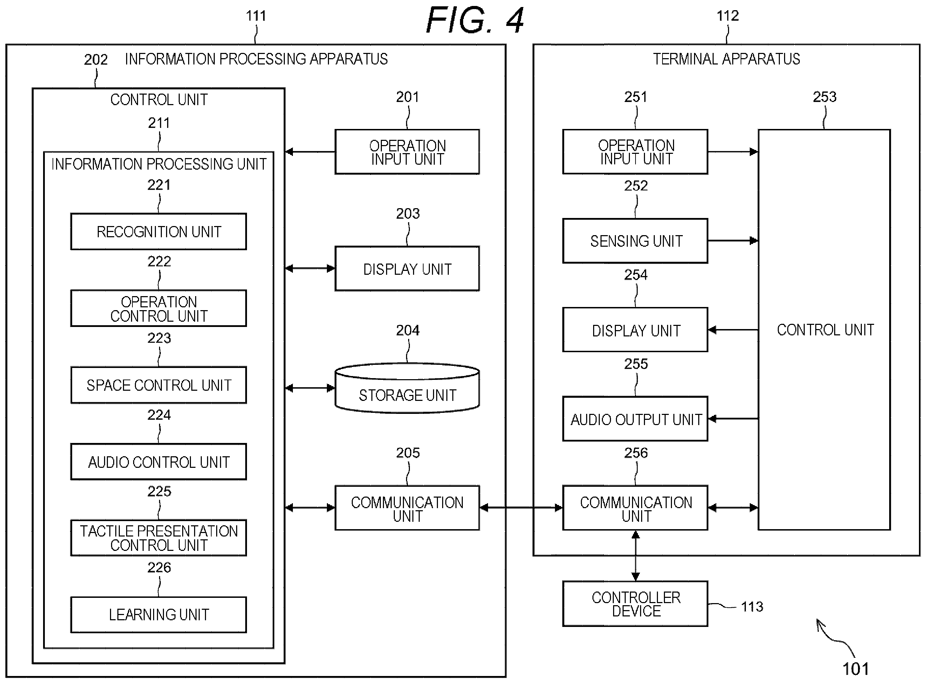

Fig. 4 is a block diagram illustrating a configuration example of functions of the information processing apparatus 111 and the terminal apparatus 112 of the XR system 101.

The information processing apparatus 111 includes an operation input unit 201, a control unit 202, a display unit 203, a storage unit 204, and a communication unit 205.

The operation input unit 201 includes, for example, an input device such as a keyboard and a mouse. The operation input unit 201 receives the user's operation input and supplies, to the control unit 202, an operation input signal indicating the content of the user's operation input.

The control unit 202 includes, for example, an electronic circuit such as a CPU and a microprocessor. Furthermore, the control unit 202 may include a ROM that stores programs to be used, calculation parameters, and the like, and a RAM that temporarily stores parameters and the like that change as appropriate.

For example, the control unit 202 functions as an arithmetic processing apparatus and a control apparatus, and controls the overall operation of the information processing apparatus 111 or executes various types of processing according to various programs.

For example, the control unit 202 implements an information processing unit 211 by executing the information processing apparatus 111 and an XR application capable of user experience in the XR space and editing of a virtual object. The information processing unit 211 includes a recognition unit 221, an operation control unit 222, a space control unit 223, an audio control unit 224, a tactile presentation control unit 225, and a learning unit 226. That is, the recognition unit 221, the operation control unit 222, the space control unit 223, the audio control unit 224, the tactile presentation control unit 225, and the learning unit 226 are implemented by the control unit 202 executing the XR application. Furthermore, input and output of each unit of the information processing unit 211, that is, the recognition unit 221, the operation control unit 222, the space control unit 223, the audio control unit 224, the tactile presentation control unit 225, and the learning unit 226 are executed via the XR application.

The recognition unit 221 recognizes the state of the information processing apparatus 111, the state of the terminal apparatus 112, the state around the terminal apparatus 112, the state of the controller device 113, the state of the user, the user operation, the state of the XR space, and the like, on the basis of at least one of an operation input signal from the operation input unit 201, information from the control unit 202, information from the display unit 203, information from the communication unit 205, sensing data transmitted from the terminal apparatus 112, a controller signal transmitted from the controller device 113, information from the operation control unit 222, or information from the space control unit 223.

The state of the information processing apparatus 111 to be recognized includes, for example, at least one of the state of each unit of the information processing apparatus 111, the state of each application such as the XR application, a communication state between the information processing apparatus 111 and another apparatus, or various types of setting information (for example, setting values of various setting items, and the like). The state of each unit of the information processing apparatus 111 includes, for example, at least one of the operation state, the presence or absence of abnormality, or the content of the abnormality of each unit. The state of each application includes, for example, at least one of the start and end, the operation state, the presence or absence of abnormality, or the content of the abnormality of each application. The communication state between the information processing apparatus 111 and another apparatus includes, for example, a communication state with the terminal apparatus 112 and a communication state with the controller device 113 via the terminal apparatus 112.

The state of the terminal apparatus 112 to be recognized includes, for example, at least one of the position, the orientation, or the behavior of the terminal apparatus 112 or various types of setting information (for example, setting values of various setting items, and the like). Note that, for example, in a case where the terminal apparatus 112 is worn by the user, the position, orientation, and behavior of the terminal apparatus 112 indirectly indicate the position, orientation, and behavior of the part of the user wearing the terminal apparatus 112.

The state around the terminal apparatus 112 to be recognized includes, for example, at least one of the type, the position, the orientation, the behavior, the size, the shape, the appearance, or the feature amount of a real object around the terminal apparatus 112 (user).

The state of the controller device 113 to be recognized includes, for example, at least one of the position, the orientation, or the behavior of the controller device 113 or various types of setting information (for example, setting values of various setting items, and the like).

The state of the user to be recognized includes, for example, at least one of the position, the orientation, the overall behavior, the body part's behavior, or the line-of-sight direction of the user.

The user operation to be recognized includes, for example, at least one of an operation input by the operation input unit 201, an operation input by the controller device 113, an operation input by the gesture of the user, or an operation input by a virtual tool or the like in the XR space.

The state of the XR space to be recognized includes, for example, at least one of the type, the position, the orientation, the behavior, the size, the shape, the appearance, or the feature amount of a virtual object in the XR space.

The recognition unit 221 supplies information regarding a recognition result to each unit of the information processing apparatus 111.

Furthermore, the recognition unit 221 transmits the information regarding the recognition result to the terminal apparatus 112 via the communication unit 205, or transmits the information to the controller device 113 via the communication unit 205 and the terminal apparatus 112. For example, in the case of detecting a change or abnormality in the state of the terminal apparatus 112 or the input device 113, the recognition unit 221 transmits information indicating the detected content to the terminal apparatus 112 via the communication unit 205 or transmits the information to the controller device 113 via the communication unit 205 and the terminal apparatus 112. For example, in the case of detecting a change (for example, start, stop, and the like) or abnormality in the state of an application such as the XR application, the recognition unit 221 transmits information indicating the detected content to the terminal apparatus 112 via the communication unit 205, or transmits the information to the controller device 113 via the communication unit 205 and the terminal apparatus 112.

Note that, for example, any method such as image recognition or object recognition can be used for the recognition processing of various recognition targets by the recognition unit 221.

Furthermore, for example, in a case where the XR space is shared by a plurality of users, the recognition unit 221 executes recognition processing for each user, for example. For example, the recognition unit 221 recognizes the state of the terminal apparatus 112 of each user, the state around the terminal apparatus 112 of each user, the state of the controller device 113 of each user, the state of each user, and the user operation of each user. The result of the recognition processing for each user may be shared between the users, for example, by being transmitted to the terminal apparatus 112 or the controller device 113 of each user.

The operation control unit 222 controls operation processing by the controller device 113 on the basis of at least one of the recognition result by the recognition unit 221 or the controller signal transmitted from the controller device 113.

For example, the operation control unit 222 controls operation processing by the controller device 113 on the basis of at least one of the position or orientation of the controller device 113 or the controller signal. For example, the operation control unit 222 controls enabling or disabling of each operation member included in the controller device 113, a function assigned to each operation member, an operation method of the function assigned to each operation member, and the like, on the basis of the mounting method, the grasping method, the use method, and the like of the controller device 113.

The operation control unit 222 supplies information regarding the control of the operation processing by the controller device 113 to each unit of the information processing apparatus 111.

The space control unit 223 controls presentation of a two-dimensional space or a three-dimensional space by the display unit 203 and presentation of the XR space by the terminal apparatus 112, on the basis of at least a part of the recognition result by the recognition unit 221.

For example, the space control unit 223 generates a display object to be displayed in the two-dimensional space or the three-dimensional space on the basis of at least a part of the recognition result by the recognition unit 221, and performs various calculations necessary for construction, display, and the like of the two-dimensional space or the three-dimensional space of the behavior of the display object or the like. The space control unit 223 generates display control information for controlling the display of the two-dimensional space or the three-dimensional space on the basis of the calculation result and supplies the display control information to the display unit 203, thereby controlling the display of the two-dimensional space or the three-dimensional space by the display unit 203. Note that the display control information may include, for example, information for using a two-dimensional space or a three-dimensional space (for example, an operation menu, guidance, a message, and the like), and information for notifying of the state of the information processing apparatus 111 (for example, setting information, remaining battery charge, error display, and the like).

For example, the space control unit 223 generates a virtual object to be displayed in the XR space on the basis of at least a part of the recognition result by the recognition unit 221, and performs various calculations necessary for construction, display, and the like of the XR space such as the behavior of the virtual object. The recognition result by the recognition unit 221 includes, for example, operation content for the controller device 113a recognized by the recognition unit 221, on the basis of the controller signal including an operation input signal from the controller device 113a and the like. The space control unit 223 generates display control information for controlling the display of the XR space on the basis of the calculation result and transmits the display control information to the terminal apparatus 112 via the communication unit 205, thereby controlling the display of the XR space by the terminal apparatus 112. Note that the display control information may include, for example, information for using the XR space (for example, an operation menu, guidance, a message, and the like) and information for notifying of the state of the XR system 101 (for example, setting information, remaining battery charge, error display, and the like).

The space control unit 223 supplies information regarding the two-dimensional space, the three-dimensional space, and the XR space to each unit of the information processing apparatus 111.

The audio control unit 224 controls the output of audio by the terminal apparatus 112 on the basis of at least one of the recognition result by the recognition unit 221 or the information from the space control unit 223. For example, the space control unit 223 generates audio control information for outputting audio in the terminal apparatus 112. The audio control information includes, for example, information regarding at least one of the type, the content, the frequency, the amplitude, or the waveform of audio to be output. The audio control unit 224 controls the output of the audio by the terminal apparatus 112 by transmitting the audio control information to the terminal apparatus 112 via the communication unit 205.

The tactile presentation control unit 225 controls presentation of a tactile stimulus to the user on the basis of at least one of the recognition result by the recognition unit 221 or the information from the space control unit 223. For example, the tactile presentation control unit 225 generates tactile control information for presenting a tactile stimulus in the controller device 113. The tactile control information includes, for example, information regarding at least one of the type, the pattern, the strength, or the length of a tactile sensation to be presented. The tactile presentation control unit 225 transmits the tactile control information to the controller device 113 via the communication unit 205 and the terminal apparatus 112, thereby controlling presentation of the tactile stimulus by the controller device 113.

The learning unit 226 executes learning processing related to processing of the XR system 101 on the basis of at least one of the recognition result by the recognition unit 221 or learning data given from the outside. For example, the learning unit 226 learns the user's preference, action pattern, and the like, and adjusts various types of processing and parameters of the XR system 101 on the basis of the learning result so as to appropriately correspond to the user's taste, action pattern, and the like. For example, the learning unit 226 learns a difference between the XR space and the real space, and adjusts the design data and the like on the basis of the learning result so as to bring the characteristics, behavior, and the like of the virtual object in the XR space closer to the real object.

For example, the learning unit 226 causes the storage unit 204 to store information (for example, a learning model or the like) indicating a learning result.

Note that the control unit 202 may execute not only the XR application but also another application.

The storage unit 204 includes, for example, a read only memory (ROM) that stores programs, calculation parameters, and the like to be used for processing of the control unit 202, and a random access memory (RAM) that temporarily stores parameters and the like that change as appropriate.

The communication unit 205 communicates with an external apparatus to transmit and receive data. For example, the communication unit 205 communicates with the terminal apparatus 112 to transmit and receive data. For example, the communication unit 205 transmits the display control information, the audio control information, and the tactile control information to the terminal apparatus 112. For example, the communication unit 205 receives sensing data and a controller signal from the terminal apparatus 112.

The communication method of the communication unit 205 may be wired or wireless, and for example, a wired LAN, a wireless LAN, Wi-Fi, Bluetooth, or the like is used. Furthermore, the communication unit 205 may support two or more types of communication methods.

The terminal apparatus 112 includes an operation input unit 251, a sensing unit 252, a control unit 253, a display unit 254, an audio output unit 255, and a learning unit 226.

The operation input unit 251 includes, for example, an operation input device such as a button. The operation input unit 201 receives the user's operation input and supplies, to the control unit 253, an operation input signal indicating the content of the user's operation input. For example, the operation input unit 251 receives an operation input such as turning on or off the power of the terminal apparatus 112 and adjusting the brightness of the display unit 254 by the user.

The sensing unit 252 includes various sensors for sensing the terminal apparatus 112, the periphery of the terminal apparatus 112, and the state of the user. For example, the sensing unit 252 includes a camera or a depth sensor for imaging the periphery of the terminal apparatus 112. For example, the sensing unit 252 includes a camera or a depth sensor for imaging both eyes of the user. For example, the sensing unit 252 includes an inertial measurement unit (IMU) for detecting acceleration, angular velocity, and the like of the terminal apparatus 112. For example, the sensing unit 252 includes a global navigation satellite system (GNSS) receiver for detecting the current position of the terminal apparatus 112 (user). The sensing unit 252 supplies, to the control unit 253, sensing data indicating a detection result of at least one or more of the sensors.

The control unit 253 includes, for example, an electronic circuit such as a CPU and a microprocessor. Furthermore, the control unit 253 may include a ROM that stores programs to be used, calculation parameters, and the like, and a RAM that temporarily stores parameters and the like that change as appropriate.

For example, the control unit 253 functions as an arithmetic processing apparatus and a control apparatus, and controls the overall operation of the terminal apparatus 112 and executes various types of processing on the basis of the operation input signal from the operation input unit 251, the sensing data from the sensing unit 252, the display control information and the audio control information from the information processing apparatus 111, the controller signal from the controller device 113, and the like according to various programs. For example, the control unit 253 controls display of the XR space or the like by the display unit 254 on the basis of the display control information. For example, the control unit 253 controls output of the audio by the audio output unit 255 on the basis of the audio control information.

The display unit 254 includes various display devices. For example, in a case where the terminal apparatus 112 is an HMD, the display unit 254 includes displays fixed to the left and right eyes of the user, and displays a left-eye image and a right-eye image. The display includes, for example, a display panel such as a liquid crystal display or an organic electro luminescence (EL) display, or a laser scanning display such as a retina direct drawing display. Furthermore, the display unit 254 may include, for example, an imaging optical system that enlarges and projects a display screen to form an enlarged virtual image having a predetermined view angle on the user's pupil. For example, the display unit 254 displays the XR space including the virtual object under the control of the control unit 253.

The audio output unit 255 includes, for example, an audio output device such as a headphone, an earphone, or a speaker. The audio output unit 255 outputs an audio under the control of the control unit 253.

The communication unit 256 communicates with an external apparatus to transmit and receive data. For example, the communication unit 256 communicates with the terminal apparatus 112 and the controller device 113 to transmit and receive data. For example, the communication unit 256 transmits sensing data and a controller signal to the information processing apparatus 111. For example, the communication unit 256 receives the display control information, the audio control information, and the tactile control information from the information processing apparatus 111. For example, the communication unit 256 transmits the tactile control information to the controller device 113. For example, the communication unit 256 receives the controller signal from the controller device 113.

The communication method of the communication unit 256 may be wired or wireless, and for example, a wired LAN, a wireless LAN, Wi-Fi, Bluetooth, or the like is used. Furthermore, the communication unit 256 may support two or more types of communication methods. Moreover, the communication unit 256 may perform communication between the information processing apparatus 111 and the controller device 113 by using different communication methods.

The following is an example of processing of the information processing apparatus 111 using the XR application.

For example, the communication unit 205 receives input information indicating at least one of the state of the terminal apparatus 112, the state around the terminal apparatus 112, the state of the user, the behavior of the user, or the operation input to the input device 113 from the terminal apparatus 112 or the controller device 113 via the terminal apparatus 112, and supplies the input information to the control unit 221. The control unit 221 executes the XR application on the basis of the input information, generates output information for controlling display of a virtual object including CAD information regarding CAD in the XR space, and outputs the output information to the terminal apparatus 112. The communication unit 205 transmits the output information to the terminal apparatus 112.

Furthermore, for example, the control unit 221 executes the XR application and outputs output information indicating a change or abnormality in the state of the XR application to the terminal apparatus 112 or the controller device 113. The communication unit 205 transmits the output information to the terminal apparatus 122 or to the controller device 113 via the terminal apparatus 112.

On the other hand, for example, the terminal apparatus 112 notifies of a change or abnormality in the state of the XR application by an image, a message, an audio, vibration, or the like on the basis of the output information. For example, the controller device 113 notifies of a change or abnormality in the state of the XR application by vibration or the like on the basis of the output information.

Note that, hereinafter, in a case where each unit of the information processing apparatus 111 communicates with the outside via the communication unit 205, the description of the communication unit 205 may be omitted. For example, in a case where the space control unit 223 of the information processing apparatus 111 communicates with the terminal apparatus 112 via the communication unit 205, it may be simply described that the space control unit 223 of the information processing apparatus 111 communicates with the terminal apparatus 112.

Hereinafter, in a case where each unit of the terminal apparatus 112 communicates with the outside via the communication unit 256, the description of the communication unit 256 may be omitted. For example, in a case where the control unit 253 of the terminal apparatus 112 communicates with the information processing apparatus 111 via the communication unit 256, it may be simply described that the control unit 253 of the terminal apparatus 112 communicates with the information processing apparatus 111.

For example, in the XR system 101, the space control unit 223 of the information processing apparatus 111 generates the display control information and transmits the display control information to the terminal apparatus 112 via the communication unit 205, and the control unit 253 of the terminal apparatus 112 receives the display control information via the communication unit 256 and controls the display unit 254 on the basis of the display control information. Hereinafter, the description of the series of processing may be simplified, and for example, description may be made such that the space control unit 223 of the information processing apparatus 111 controls the display unit 254 of the terminal apparatus 112.

For example, in the XR system 101, the audio control unit 224 of the information processing apparatus 111 generates the audio control information and transmits the audio control information to the terminal apparatus 112 via the communication unit 205, and the control unit 253 of the terminal apparatus 112 receives the audio control information via the communication unit 256 and controls the audio output unit 255 on the basis of the audio control information. Hereinafter, the description of the series of processing is simplified, and for example, description may be made such that the audio control unit 224 of the information processing apparatus 111 controls the audio output unit 255 of the terminal apparatus 112.

For example, in the XR system 101, the tactile presentation control unit 225 of the information processing apparatus 111 generates tactile control information and transmits the tactile control information to the controller device 113 via the communication unit 205 and the terminal apparatus 112, and the controller device 113 presents a tactile stimulus on the basis of the tactile control information. Hereinafter, the description of the series of processing is simplified, and for example, description may be made such that the tactile presentation control unit 225 of the information processing apparatus 111 controls the controller device 113 via the terminal apparatus 112.

### <Configuration example of controller device 113a>

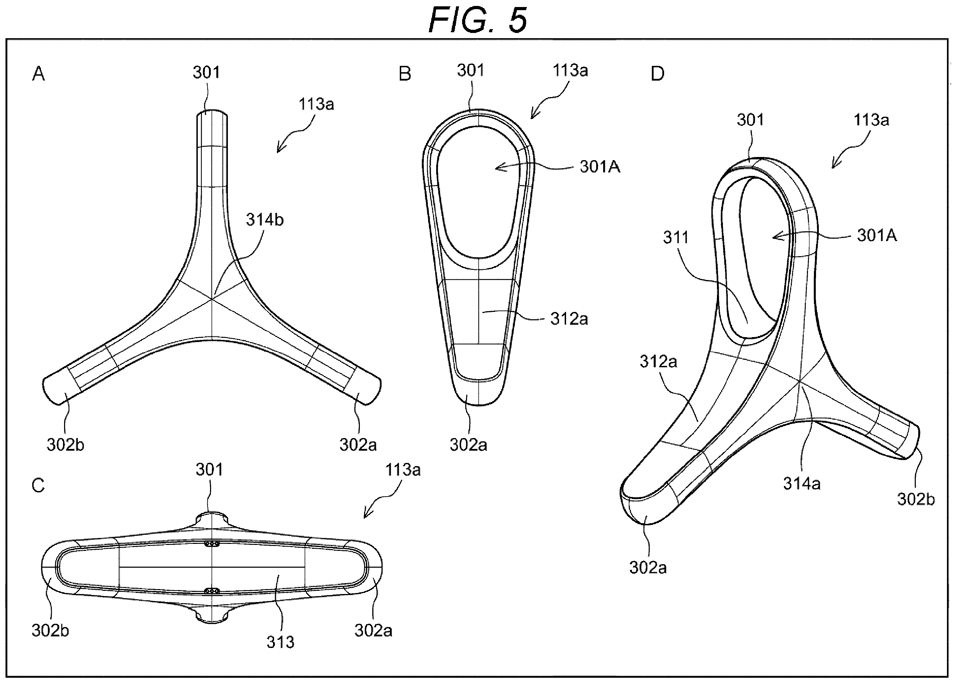

Next, a configuration example of the controller device 113a of Fig. 3 will be described with reference to Figs. 5 to 14.

Fig. 5 illustrates a configuration example of the appearance of the controller device 113a. A of Fig. 5 is a left side view of the controller device 113a. B of Fig. 5 is a front view of the controller device 113a. C of Fig. 5 is a bottom view of the controller device 113a. D of Fig. 5 is a perspective view of the controller device 113a as viewed from obliquely front right.

Note that, hereinafter, an upward direction in A of Fig. 5 is defined as the upward direction of the controller device 113a, and a downward direction in A of Fig. 5 is defined as the downward direction of the controller device 113a. A right direction in A of Fig. 5 is defined as the front direction of the controller device 113a, and a left direction in A of Fig. 5 is defined as the rear direction of the controller device 113a.

The controller device 113a has a symmetrical shape when viewed from any of the front, rear, left, right, upper, and lower directions. Furthermore, in the controller device 113a, the shape of the front surface viewed from the front is similar to the shape of the rear surface viewed from the rear, and the shape of the right side surface viewed from the right direction is similar to the shape of the left side surface viewed from the left direction.

The controller device 113a is roughly divided into three parts of a ring portion 301, an operation portion 302a, and a holding portion 302b.

As illustrated in A of Fig. 5, the ring portion 301 extends upward from the vicinity of the center of gravity of a left side surface 314b. The operation portion 302a and the holding portion 302b have symmetrical shapes about the ring portion 301 when viewed from the direction of the side surface (for example, the left side surface 314b of the controller device 113a) of the ring portion 301. The operation portion 302a extends forward and obliquely downward from the vicinity of the center of gravity of the left side surface 314b (the vicinity of the lower end of the ring portion 301). The holding portion 302b extends rearward and obliquely downward from the vicinity of the center of gravity of the left side surface 314b (the vicinity of the lower end of the ring portion 301) in symmetry with the operation portion 302a. When the tip of the ring portion 301, the tip of the operation portion 302a, and the tip of the holding portion 302b are connected, an isosceles triangle having the tip of the ring portion 301 as a vertex is formed. An angle between the ring portion 301 and the operation portion 302a, an angle between the ring portion 301 and the holding portion 302b, and an angle between the operation portion 302a and the holding portion 302b are each about 120 degrees, and the above-described isosceles triangle is a substantially equilateral triangle.

The tip of the side surface of the ring portion 301 extends linearly, and the root extends in a curved shape. The tip of the side surface of the operation portion 302a extends linearly, and the root extends in a curved shape. The tip of the side surface of the holding portion 302b extends linearly, and the root extends in a curved shape. A boundary portion between the ring portion 301 and the operation portion 302a, a boundary portion between the ring portion 301 and the holding portion 302b, and a boundary portion between the operation portion 302a and the holding portion 302b are curved.

As illustrated in B of Fig. 5, a hole 301A penetrating in a front-rear direction is formed in the ring portion 301. The outer periphery of the ring portion 301 expands gently toward the tip, and the tip is curved. Similarly, the hole 301A extends gently toward the tip, and the tip and the end are curved.

As illustrated in B of Fig. 5, the operation portion 302a is gradually thinned toward the tip, and the tip is curved. An upper surface 312a of the operation portion 302a is inclined forward and obliquely downward. On the upper surface 312a of the operation portion 302a, a shallow groove curved in a lateral direction and extending in the front-rear direction is formed. The tip of the upper surface 312a of the operation portion 302a is slightly recessed with respect to the tip of the operation portion 302a. Therefore, the upper surface 312a of the operation portion 302a has a shape in which in a case where the user's finger is inserted into the hole 301A of the ring portion 301 in the front direction from the rear, the inserted finger can be easily placed.

The holding portion 302b has a similar shape to the operation portion 302a, and an upper surface 312b (not illustrated) having a similar shape to the upper surface 312a is formed.

As illustrated in C of Fig. 5, a bottom surface 313 curved in the front-rear direction is formed by the lower surface of the operation portion 302a and the lower surface of the holding portion 302b. A shallow groove curved in the lateral direction and extending in the front-rear direction is formed on the bottom surface 313.

A rubber-like material such as silicon or elastomer is used for the inner peripheral surface 311, the upper surface 312a, the upper surface 312b, and the bottom surface 313 of the controller device 113a, for example. For other parts of the controller device 113a, for example, an IR transmissive resin is used.

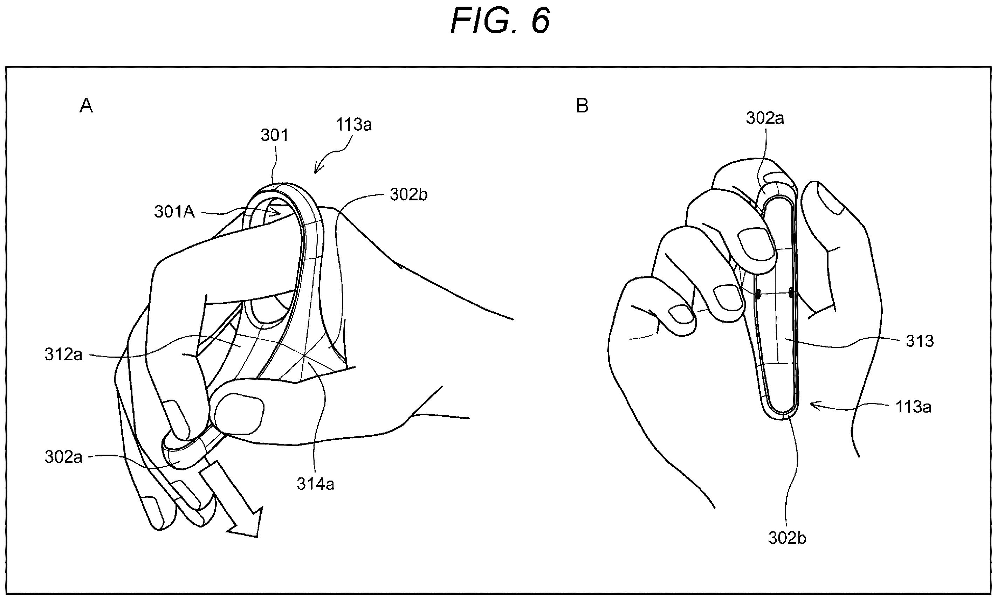

Figs. 6 to 8 illustrate examples of a method of grasping the controller device 113a.

For example, as illustrated in A of Fig. 6, the index finger of the right hand is inserted into the ring portion 301 in the front direction from the rear, the tip of the index finger is placed near the tip of the upper surface 312a of the operation portion 302a, and the operation portion 302a is operable by the index finger. Since the size of the hole 301A of the ring portion 301 has a margin with respect to the thickness of the index finger, the index finger is easily inserted. The tip of the thumb of the right hand is lightly placed near the tip of the side surface of the operation portion 302a, and the holding portion 302b is lightly gripped and held by the palm of the right hand.

For example, as indicated by an arrow in A of Fig. 6, in a case where the vicinity of the tip of the operation portion 302a is pressed downward by the index finger, the tip of the holding portion 302b abuts on the palm as illustrated in B of Fig. 6, whereby the controller device 113a is prevented from rotating in the pressing direction. Therefore, the vicinity of the tip of the operation portion 302a is prevented from shaking in the space, and the user can reliably press the vicinity of the tip of the operation portion 302a in a state where the direction of the tip of the operation portion 302a is stable.

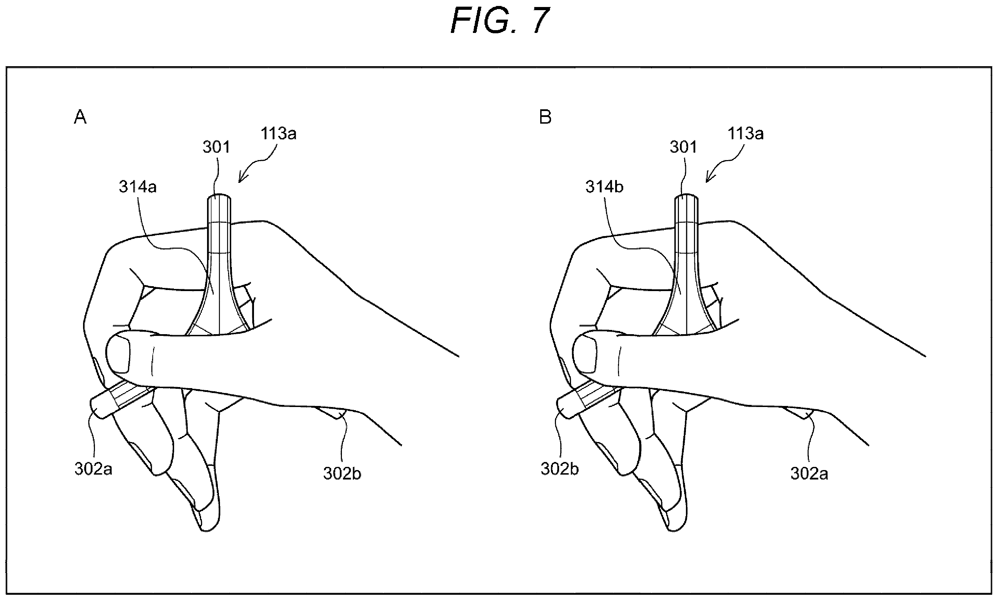

Furthermore, as described above, in the controller device 113a, the shape viewed from the front is similar to the shape viewed from the rear, and the shape viewed from the right direction is similar to the shape viewed from the left direction. Therefore, the user can hold the controller device 113a without worrying about the front and rear. That is, as illustrated in A of Fig. 7, the user can hold the controller device 113a such that the operation portion 302a faces the direction of the fingertip and a right side surface 314a faces the direction of the thumb. Furthermore, as illustrated in B of Fig. 7, the user can hold the controller device 113b such that the holding portion 302b faces the direction of the fingertip and the left side surface 314b faces the direction of the thumb.

Note that, hereinafter, as illustrated in A of Fig. 7, grasping the controller device 113a such that the operation portion 302a faces the direction of the fingertip is referred to as grasping the controller device 113a in a forward direction. Hereinafter, as illustrated in B of Fig. 7, grasping the controller device 113a such that the holding portion 302b faces the direction of the fingertip is referred to as grasping the controller device 113a in a rearward direction.

In a case where the controller device 113a is grasped in the rearward direction, the roles of the operation portion 302a and the holding portion 302b are switched. That is, the holding portion 302b functions as an operation portion that can be operated by the index finger of the right hand, and the operation portion 302a functions as a holding portion that is held by the palm of the right hand.

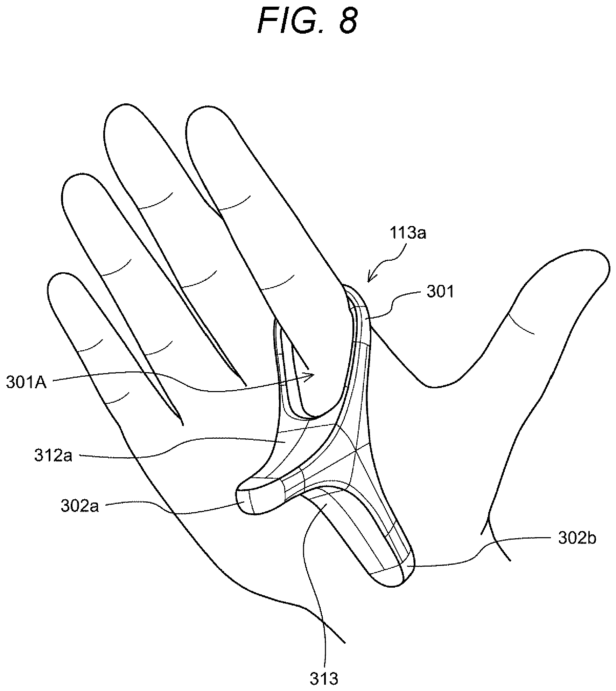

Furthermore, as illustrated in Fig. 8, even if the user releases the hand from the controller device 113a, the ring portion 301 is caught by the index finger, and the controller device 113a does not fall. Therefore, without providing a strap or the like, it is prevented that the user unexpectedly drops the controller device 113a.

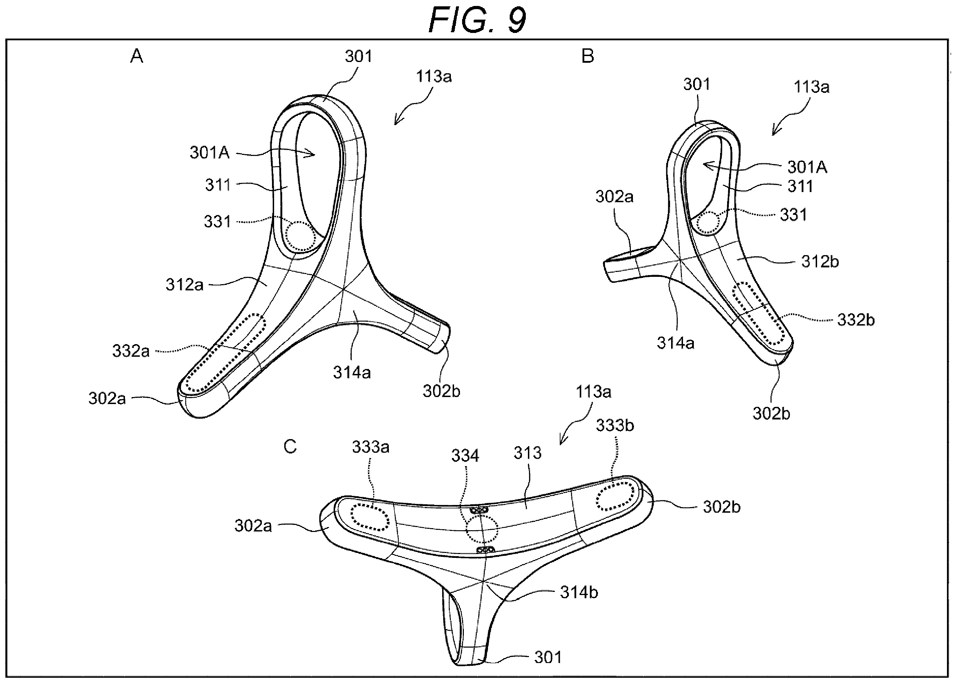

Fig. 9 illustrates an arrangement example of operation members of the controller device 113a. A of Fig. 9 is a perspective view of the controller device 113a as viewed from a right and obliquely upper direction. B of Fig. 9 is a perspective view of the controller device 113a as viewed from a left and obliquely upper direction. C of Fig. 9 is a perspective view of the controller device 113a as viewed from a rear and obliquely lower direction.

The operation members are arranged symmetrically about the ring portion 301 in the front-rear direction and the left-right direction of the controller device 113a.

For example, the operation member 331 is arranged at the lower end of the inner peripheral surface 311 (hole 301A) of the ring portion 301. For example, the user bends the index finger and operates the operation member 331 with the fingertip of the index finger.

An operation member 332a is arranged near the tip of the upper surface 312a of the operation portion 302a. An operation member 332b is arranged near the tip of the upper surface 312b of the holding portion 302b. For example, the user operates the operation member 332a or the operation member 332b with the fingertip of the index finger.

An operation member 333a and an operation member 333b are arranged near the front end and the rear end of the bottom surface 313, respectively. For example, the user operates the operation member 333a or the operation member 333b with the fingertip of the ring finger or the little finger.

The operation member 334 is arranged at the center of the bottom surface 313 in the front-rear direction. For example, the user operates the operation member 334 with the fingertip of the thumb, the ring finger, or the little finger.

For example, any type of operation member such as a button, a touch pad, or a joystick can be used as the operation member 331, the operation member 332a, the operation member 332b, the operation member 333a, the operation member 333b, and the operation member 334. However, the same type of operation member is used for the operation member 332a and the operation member 332b arranged at symmetrical positions about the ring portion 301. Similarly, the same type of operation member is used for the operation member 333a and the operation member 333b arranged at symmetrical positions about the ring portion 301.

Any function can be assigned to the operation member 331, the operation member 332a, the operation member 332b, the operation member 333a, the operation member 333b, and the operation member 334, for example. However, similar functions are assigned to the operation member 332a and the operation member 332b arranged at symmetrical positions about the ring portion 301. Similarly, similar functions are assigned to the operation member 333a and the operation member 333b arranged at symmetrical positions about the ring portion 301.

Specifically, for example, a function of calling a main menu screen is assigned to the operation member 331. For example, a function of selecting a virtual object is assigned to the operation member 332a and the operation member 332b. For example, functions other than the selection functions of the operation member 333a and the operation member 333b are assigned to the operation member 332a and the operation member 332b. For example, a function of calling a sub menu screen is assigned to the operation member 334.

Note that, for example, different functions may be assigned to the operation member 332a and the operation member 332b, and the functions of both may be switched depending on the direction in which the controller device 113a is held. Similarly, for example, different functions may be assigned to the operation member 333a and the operation member 333b, and the functions of both may be switched depending on the direction in which the controller device 113a is held.

As described above, the user can perform a similar operation regardless of whether the user grasps the controller device 113a in the forward direction or the rearward direction.

Note that although it is assumed that the index finger is inserted into the ring portion 301, for example, the middle finger or the ring finger may be inserted for use.

Note that hereinafter, in a case where it is not necessary to distinguish the operation member 332a and the operation member 332b from each other, they are simply referred to as the operation member 332. Hereinafter, in a case where it is not necessary to distinguish the operation member 333a and the operation member 333b from each other, they are simply referred to as the operation member 333.

### <Arrangement example of marker>

For example, a marker such as an IR light emitting element may be provided in the controller device 113a. Then, the recognition unit 221 of the information processing apparatus 111 may detect the marker of the controller device 113a on the basis of the image or the like sensed by the sensing unit 252 of the terminal apparatus 112, and recognize the relative position and orientation between the terminal apparatus 112 and the controller device 113 on the basis of the position of the detected marker.

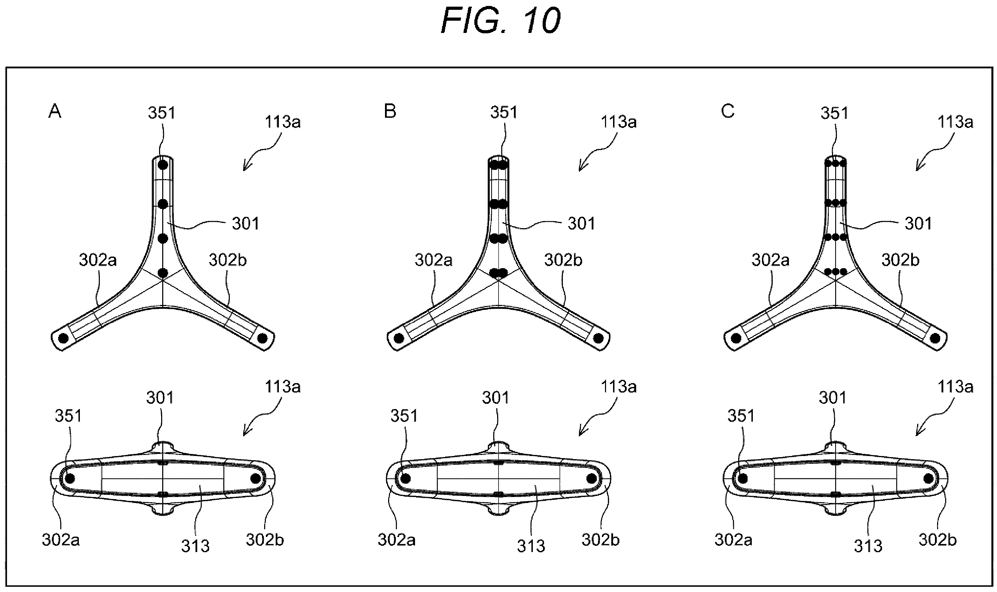

Fig. 10 illustrates an arrangement example of the markers 351 of the controller device 113a. Each marker 351 is indicated by a black circle.

For example, as illustrated in A of Fig. 10, the markers 351 are arranged in the vertical direction on the right side surface 314a and the left side surface 314b so as to surround the outer periphery of the ring portion 301. For example, the markers 351 are arranged near the tips of the both side surfaces of the operation portion 302a and near the tips of the both side surfaces of the holding portion 302b. For example, the marker 351 is arranged near the front end and the rear end of the bottom surface 313.

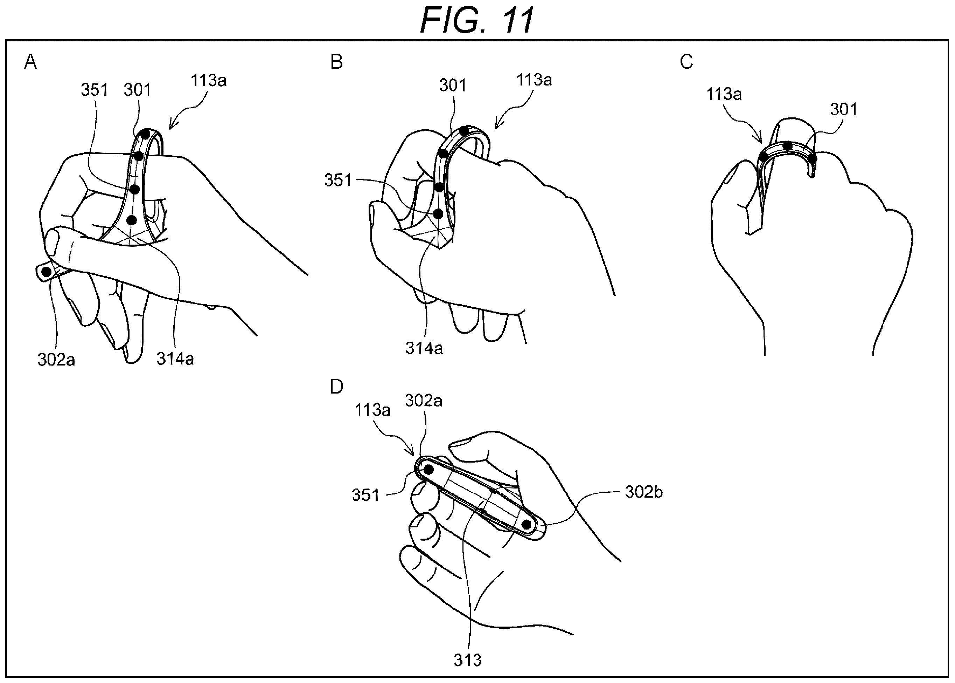

Therefore, as illustrated in A to D of Fig. 11, in any orientation of the controller device 113a, at least a part of the marker 351 becomes visible without being covered by the user's hand.

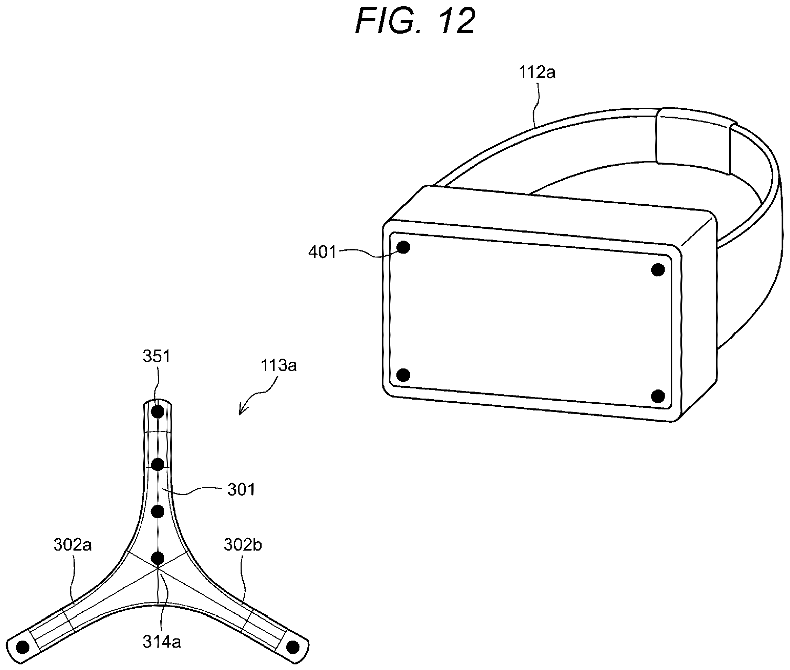

On the other hand, for example, as illustrated in Fig. 12, the terminal apparatus 112 includes a plurality of cameras 401. Each camera 401 constitutes the sensing unit 252 (Fig. 4) of the terminal apparatus 112. Each camera 401 captures an image of the controller device 113a. The terminal apparatus 112 transmits, to the information processing apparatus 111, sensing data including captured image data obtained by imaging.

On the other hand, the control unit 202 of the information processing apparatus 111 receives the sensing data. The recognition unit 221 of the control unit 202 recognizes the position and orientation of the controller device 113a with respect to the terminal apparatus 112 on the basis of the light emission pattern of the marker 351 of the controller device 113a.

Note that, for example, as illustrated in B of Fig. 10, the markers 351 may be arranged in two rows in the lateral direction so as to surround the outer periphery of the ring portion 301. Furthermore, for example, as illustrated in C of Fig. 10, the markers 351 may be arranged in three rows in the lateral direction so as to surround the outer periphery of the ring portion 301.

In this manner, the controller device 113a can be reduced in size by arranging the markers 351 on the outer periphery of the ring portion 301.

### <Example of internal structure of controller device 113a>

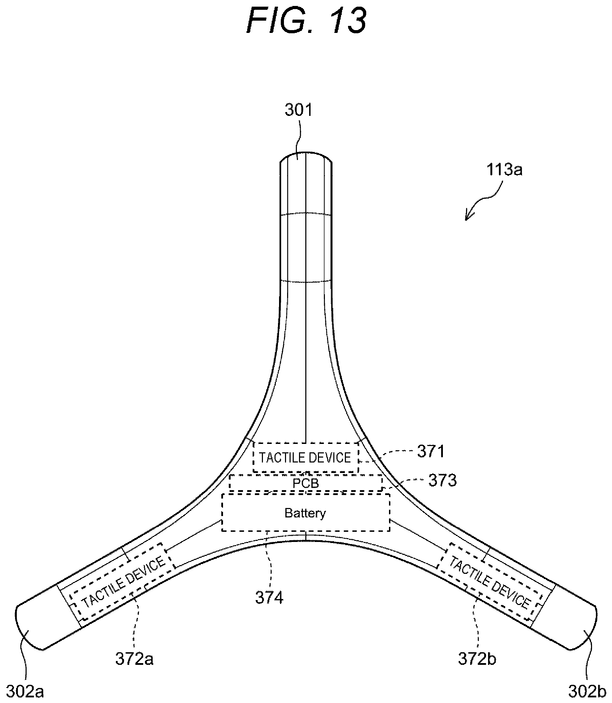

Next, an example of an internal structure of the controller device 113a will be described with reference to Fig. 13.

The controller device 113a incorporates a tactile device 371, a tactile device 372a, a tactile device 372b, a substrate 373, and a battery 374.

Each of the tactile device 371, the tactile device 372a, and the tactile device 372b includes, for example, a device that presents (transmits) a tactile stimulus such as vibration of a linear resonant actuator (LRA), an eccentric rotating mass (ERM), a piezoelectric element, or the like.

The tactile device 371 is arranged near the lower end of the inner peripheral surface 311 of the ring portion 301 (near the operation member 331 (Fig. 9)), and presents a tactile stimulus to the vicinity of the lower end of the inner peripheral surface 311.

The tactile device 372a is arranged near the tip in the operation portion 302a (near the operation member 332a (Fig. 9)), and transmits a tactile stimulus to the vicinity of the tip of the operation portion 302a.

The tactile device 372b is arranged near the tip in the holding portion 302b (near the operation member 332b (Fig. 9)), and transmits a tactile stimulus to the vicinity of the tip of the holding portion 302b.

The substrate 373 is a substrate for controlling the controller device 113a, and is arranged substantially at the center in the controller device 113a and below the tactile device 371.

The battery 374 is arranged below the substrate 373 in the controller device 113a and supplies power to each unit of the controller device 113a.

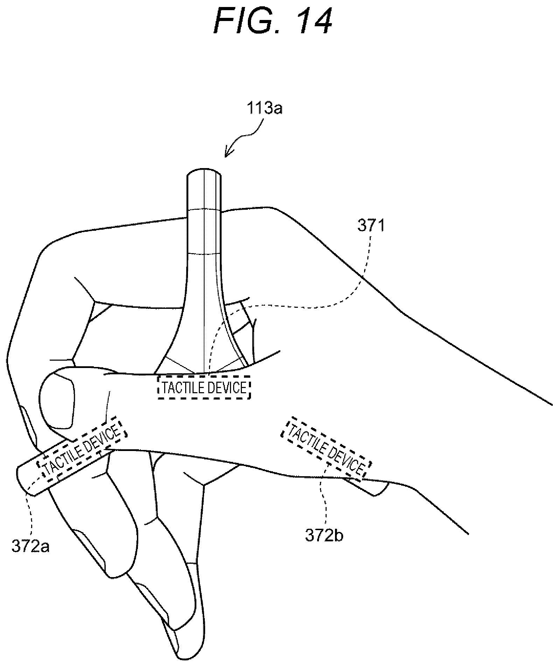

For example, as illustrated in Fig. 14, in a case where the controller device 113a is grasped in the forward direction by the right hand of the user, the tactile stimulus is presented near the base node of the thumb by the tactile device 371. The tactile stimulus is presented near the fingertip of the thumb and near the fingertip of the index finger by the tactile device 372a. The tactile stimulus is presented near the base of the thumb and the palm by the tactile device 372b.

Note that the tactile device 371, the tactile device 372a, and the tactile device 372b are arranged at symmetrical positions about the ring portion 301 in the front-rear direction of the controller device 113a. Therefore, even if the user holds the controller device 113a in either the front or rear direction, a similar tactile stimulus is presented to the user's hand.

### <Processing of XR system 101>

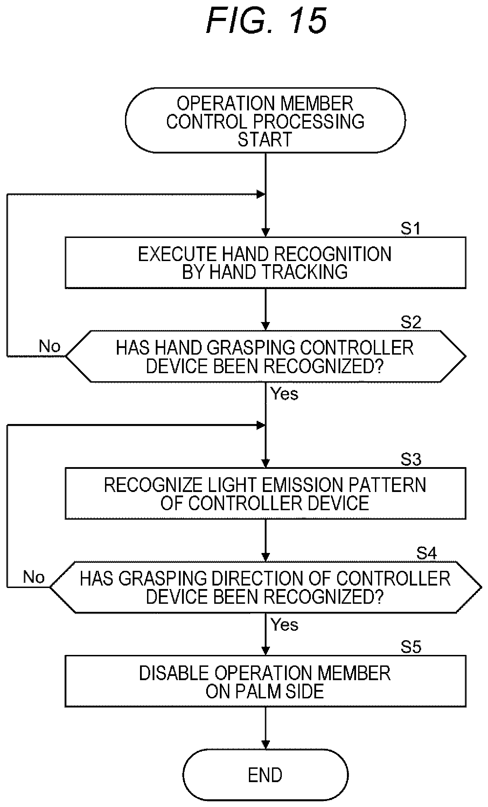

Next, processing of the XR system 101 will be described with reference to Figs. 15 to 23.

### <Operation member control processing>

First, operation member control processing executed by the XR system 101 will be described with reference to a flowchart of Fig. 15.

This processing is executed, for example, when the user holds or switches the controller device 113a.

In step S1, the information processing apparatus 111 executes hand recognition by hand tracking.

For example, the control unit 253 of the terminal apparatus 112 transmits, to the information processing apparatus 111, sensing data including captured image data indicating an image captured by each camera 401.

On the other hand, the control unit 202 of the information processing apparatus 111 receives the sensing data. The recognition unit 221 of the control unit 202 executes hand recognition by hand tracking on the basis of the captured image data included in the sensing data. Therefore, for example, the recognition unit 221 tracks the user's hand grasping the controller device 113a on the basis of the marker 351 provided in the controller device 113a.

In step S2, the recognition unit 221 determines whether or not a hand grasping the controller device 113a has been recognized on the basis of the result of the processing in step S1. In a case where it is determined that the hand grasping the controller device 113a is not recognized, the processing returns to step S1.

Thereafter, the processing of steps S1 and S2 is repeatedly executed until it is determined in step S2 that the hand grasping the controller device 113a is recognized.

On the other hand, in a case where it is determined in step S2 that the hand grasping the controller device 113a is recognized, the processing proceeds to step S3.

In step S3, the recognition unit 221 recognizes the light emission pattern of the controller device 113a on the basis of the captured image data. That is, the recognition unit 221 recognizes the light emission pattern by the markers 351 not hidden by the user's hand in the controller device 113a.

In step S4, the recognition unit 221 determines whether or not the grasping direction of the controller device 113a has been recognized. Specifically, the recognition unit 221 attempts to recognize the grasping direction of the controller device 113a on the basis of the recognition result of the hand of the user grasping the controller device 113a and the recognition result of the light emission pattern of the controller device 113a. Then, in a case where it is determined that the grasping direction of the controller device 113a has not been recognized, the processing returns to step S3.

Thereafter, the processing of steps S3 and S4 is repeatedly executed until it is determined in step S4 that the grasping direction of the controller device 113a is recognized.

On the other hand, in a case where it is determined in step S4 that the grasping direction of the controller device 113a is recognized, the processing proceeds to step S5.

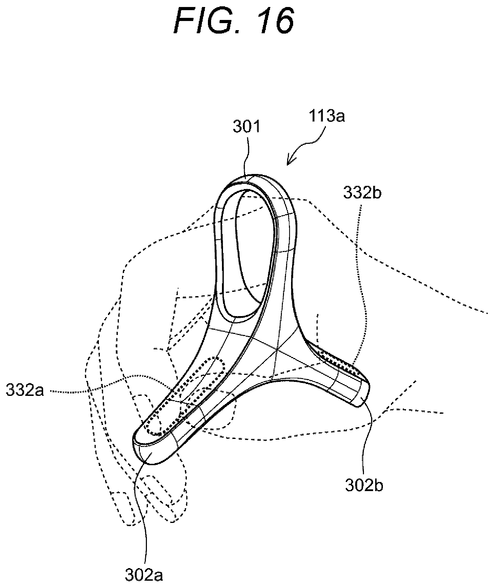

In step S5, the operation control unit 222 disables the operation member on the palm side. For example, as illustrated in Fig. 16, in a case where the controller device 113a is grasped in the forward direction, the operation member 332b on the palm side is disabled. Thereafter, for example, the recognition unit 221 and the operation control unit 222 ignore the operation input signal of the operation member 332b.

On the other hand, for example, in a case where the controller device 113a is grasped in the rearward direction, the operation member 332a on the palm side is disabled.

Thereafter, the operation member control processing ends.

Therefore, it is prevented that the operation member 332 is erroneously operated by the palm of the user.

As described above, the hand grasping the controller device 113a and the grasping direction are recognized, and the operability of the controller device 113a does not change regardless of the grasping direction of the controller device 113a.

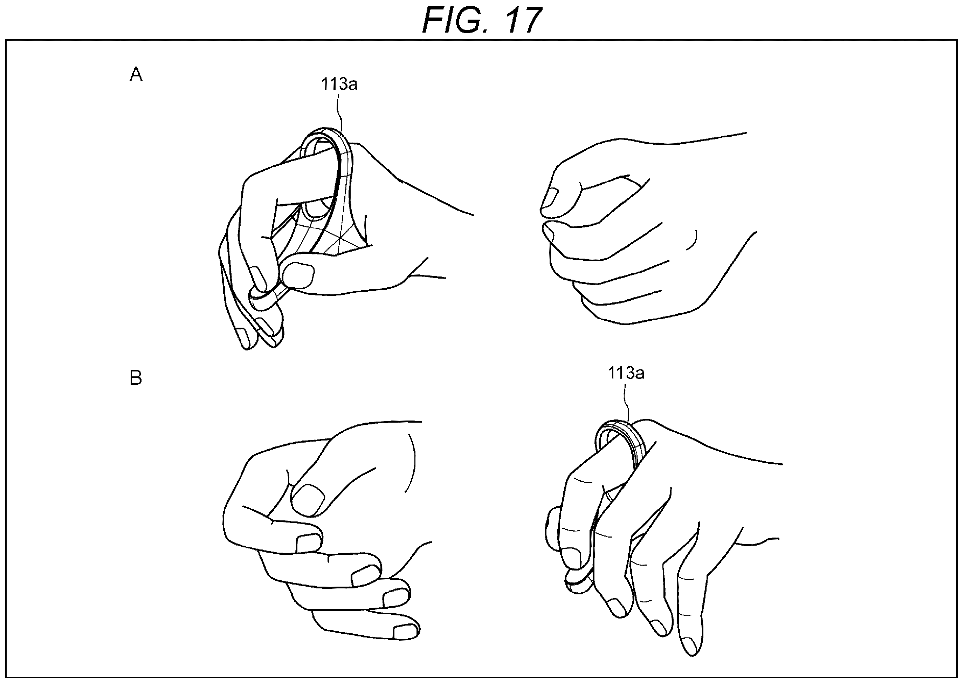

Therefore, for example, as illustrated in A and B of Fig. 17, even if no special setting is made on the terminal apparatus 112 side, the user can grasp and use the controller device 113a with the dominant hand regardless of which hand of the user is dominant.

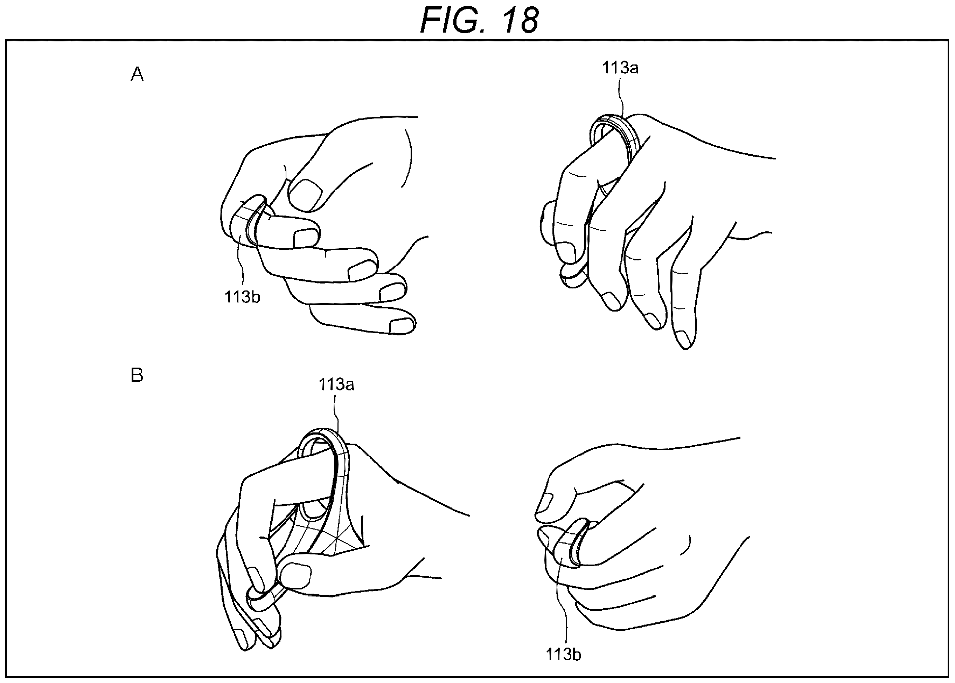

Note that, for example, as illustrated in A and B of Fig. 18, the user can wear another controller device 113b such as a ring-shaped device on the non-dominant hand side to use.

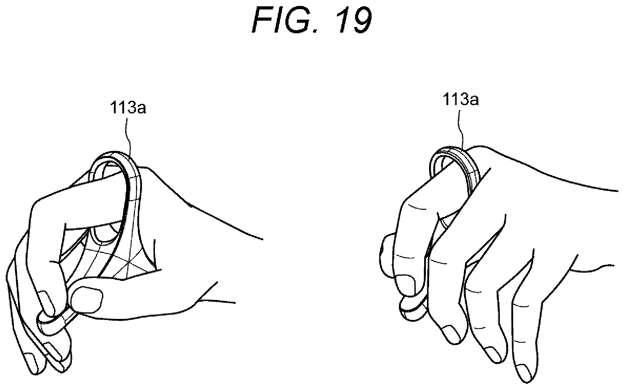

Furthermore, for example, as illustrated in Fig. 19, the user can wear the controller devices 113a on both hands to use.

### <Tactile feedback control processing>

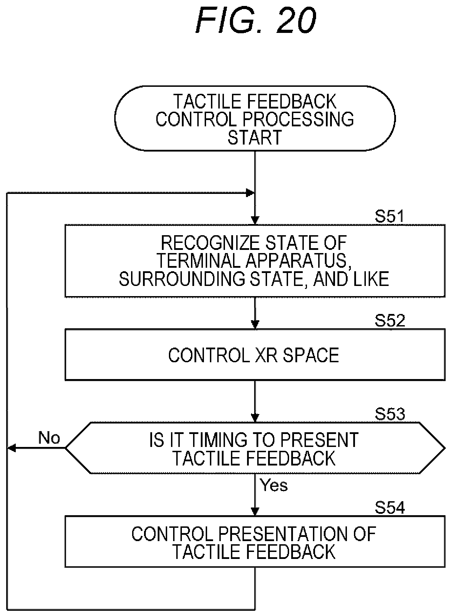

Next, tactile feedback control processing executed by the XR system 101 will be described with reference to a flowchart of Fig. 20.

This processing is started when the power of the information processing apparatus 111 is turned on, and ends when the power is turned off, for example.

In step S51, the information processing apparatus 111 recognizes the state of the terminal apparatus 112, the surrounding state, and the like.

Specifically, the sensing unit 252 of the terminal apparatus 112 senses the state of the terminal apparatus 112 and the state around the terminal apparatus 112, and supplies, to the control unit 253, sensing data indicating a sensing result. The control unit 253 transmits the sensing data to the information processing apparatus 111.

On the other hand, the control unit 202 of the information processing apparatus 111 receives the sensing data.

The controller device 113a transmits a controller signal including an operation input signal indicating operation content for each operation member, to the information processing apparatus 111 via the terminal apparatus 112.

On the other hand, the control unit 202 of the information processing apparatus 111 receives the controller signal.

The recognition unit 221 of the control unit 202 recognizes the state of the terminal apparatus 112, the state around the terminal apparatus 112, the state of the controller device 113, the state of the user, the user operation, and the like on the basis of the sensing data and the controller signal. For example, the recognition unit 221 recognizes the position and orientation of the terminal apparatus 112. For example, the recognition unit 221 recognizes the line-of-sight direction of the user. For example, the recognition unit 221 recognizes the position and orientation of the controller device 113a with respect to the terminal apparatus 112. For example, the recognition unit 221 recognizes operation content for the controller device 113a.

In step S52, the space control unit 223 of the information processing apparatus 111 controls the XR space. Specifically, the space control unit 223 generates a virtual object to be displayed in the XR space on the basis of at least a part of the recognition result by the recognition unit 221, and performs various calculations necessary for construction, display, and the like of the XR space such as the behavior of the virtual object. The space control unit 223 generates display control information for controlling the display of the XR space on the basis of the calculation result and transmits the display control information to the terminal apparatus 112 via the communication unit 205, thereby controlling the display of the XR space by the terminal apparatus 112.

The recognition unit 221 recognizes the type, position, orientation, and the like of the virtual object around the terminal apparatus 112 (user) on the basis of the information and the like from the space control unit 223.

In step S53, the tactile presentation control unit 225 determines whether or not it is a timing to present tactile feedback on the basis of at least one of the recognition result by the recognition unit 221 or the information from the space control unit 223. In a case where it is determined that it is not the timing to present the tactile feedback, the processing returns to step S51.

Thereafter, the processing of steps S51 to S53 is repeatedly executed until it is determined in step S53 that it is the timing to present the tactile feedback.

On the other hand, in a case where it is determined in step S53 that it is the timing to present the tactile feedback, the processing proceeds to step S54.

In step S54, the information processing apparatus 111 controls presentation of the tactile feedback. Specifically, the tactile presentation control unit 225 generates tactile control information for causing the controller device 113a to present a tactile stimulus. The tactile presentation control unit 225 transmits a tactile control signal to the controller device 113a via the terminal apparatus 112.

On the other hand, the controller device 113a receives the tactile control information. Each tactile device of the controller device 113a presents a tactile stimulus on the basis of the tactile control information.

Thereafter, the processing returns to step S51, and the processing in step S51 and the subsequent steps is executed.

As described above, the tactile stimulus is appropriately presented to the user by the controller device 113a.

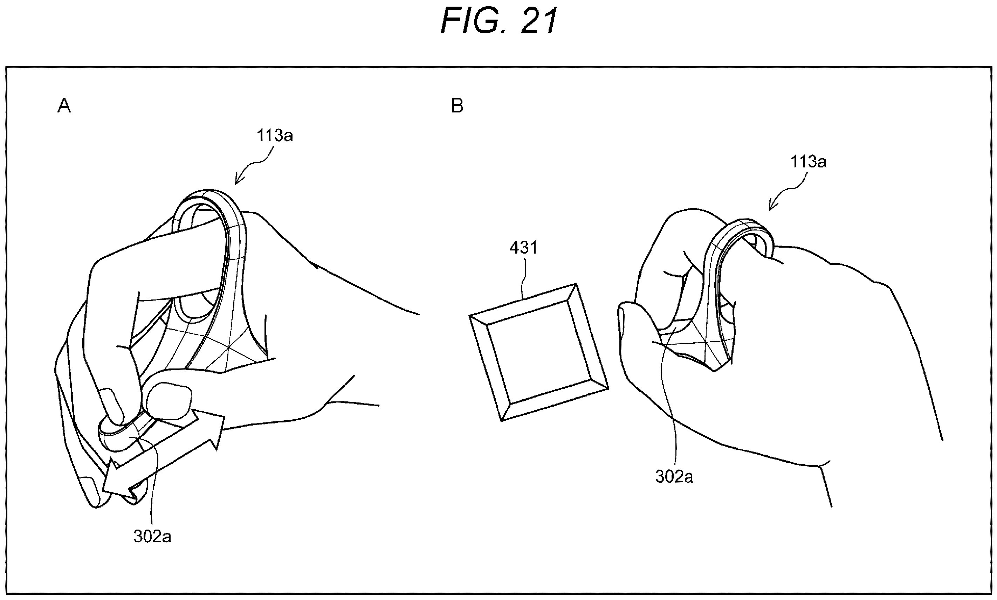

Here, an example of a method of presenting the tactile feedback of the controller device 113a will be described with reference to Figs. 21 to 23.

For example, in a case where the operation member 332a (Fig. 9) in the vicinity of the tip of the operation portion 302a of the controller device 113a includes a touch pad, and the fingertip of the index finger slides on the operation member 332a in the front-rear direction by as illustrated in A of Fig. 21, a tactile stimulus is presented to the fingertip of the index finger by the tactile device 372a (Fig. 13) arranged the vicinity of the operation member 332a.

For example, as illustrated in B of Fig. 21, in a case where the user touches a button 431 in the XR space with the tip of the operation portion 302a of the controller device 113a, a tactile stimulus is presented to the fingertip of the index finger by the tactile device 372a (Fig. 13).

For example, in a case where the controller device 113a or the hand grasping the controller device 113a collides with a virtual object in the XR space, an impact due to the collision is expressed using each tactile device of the controller device 113a.

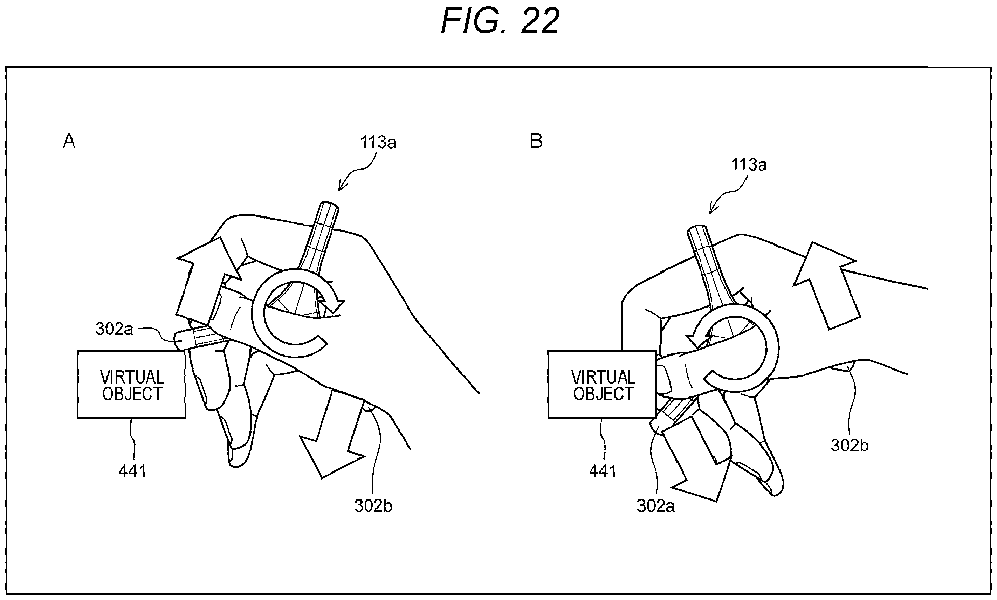

For example, A of Fig. 22 illustrates an example of a case where the tip of the operation portion 302a of the controller device 113a collides with a virtual object 441 in the XR space from above. In this case, for example, upward vibration is presented by the tactile device 372a (Fig. 13) in the vicinity of the tip of the operation portion 302a, and downward vibration is presented by the tactile device 372b (Fig. 13) in the vicinity of the tip of the holding portion 302b. Therefore, it is possible to make the user feel rotational force (moment) in the upward direction with respect to the controller device 113a.

For example, B of Fig. 22 illustrates an example of a case where the tip of the operation portion 302a of the controller device 113a collides with the virtual object 441 in the XR space from below. In this case, for example, downward vibration is presented by the tactile device 372a (Fig. 13) in the vicinity of the tip of the operation portion 302a, and upward vibration is presented by the tactile device 372b (Fig. 13) in the vicinity of the tip of the holding portion 302b. Therefore, it is possible to make the user feel rotational force (moment) in the downward direction with respect to the controller device 113a.

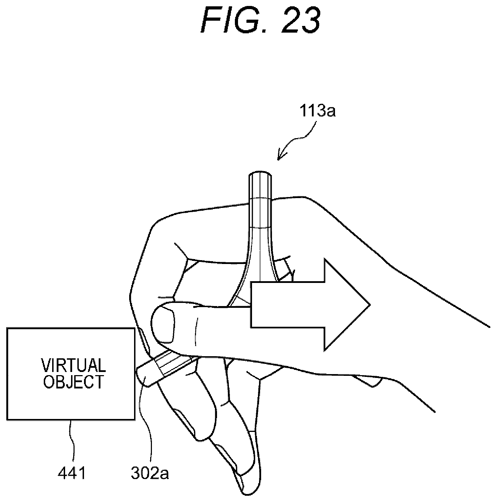

For example, Fig. 23 illustrates an example of a case where the tip of the operation portion 302a of the controller device 113a collides with the virtual object 441 in the XR space from the front. In this case, for example, the entire controller device 113a is vibrated by vibrating the tactile device 371 (Fig. 13) in the vicinity of the center of the controller device 113a. Therefore, the user can be made feel reaction force from the virtual object 441 with respect to the controller device 113a.

As described above, the operability of the controller device 113a can be improved. As a result, operability with respect to the XR space is improved.

### <<2. Application example>>

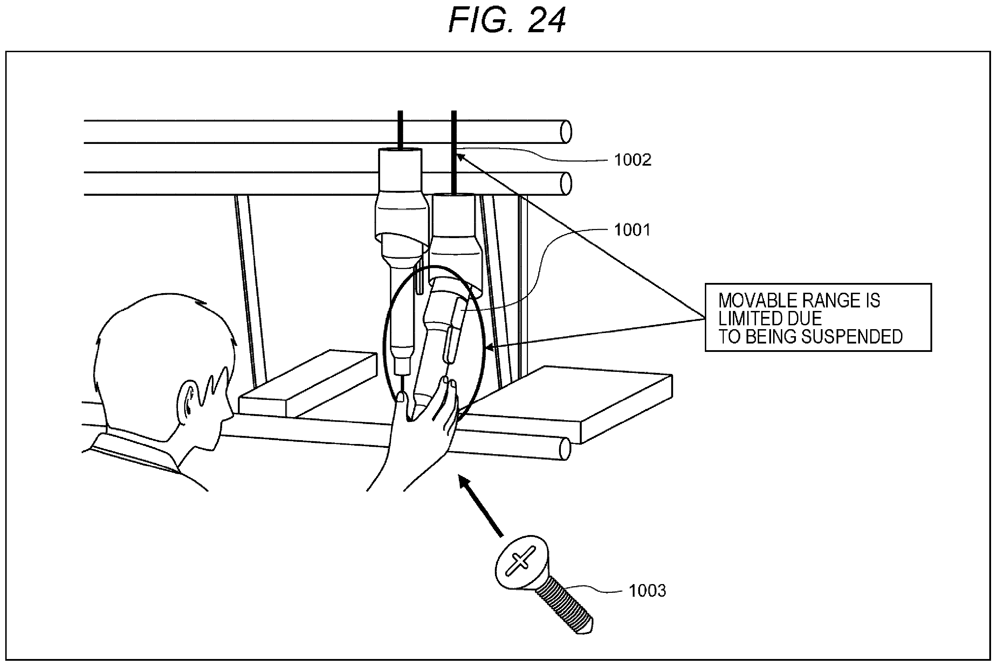

Next, application examples of the present technology will be described with reference to Figs. 24 to 37. Specifically, an example will be described in which line design of a factory is performed by three-dimensional CAD and the like by using the XR system 101.

In the line design of the factory using XR, for example, two processes of a design process and a confirmation process are repeatedly executed. In the design process, for example, arrangement and the like of each object (for example, a line, a worker, a product, a part, a tool, a jig, and the like) is considered using a virtual object. In the confirmation process, for example, each virtual object is arranged as designed, and workability of product assembly, maintenance, and the like in the line is confirmed.

Here, the behavior required for the virtual object in the XR space is different between the design process and the confirmation process.

For example, in the confirmation process, it is desirable that the virtual object exhibits a behavior similar to that at the time of line work in the real world.

For example, as schematically illustrated in Fig. 24, at the site of the line in the real world, a tool such as a screwdriver 1001 is suspended by a wire 1002, and a movable range is limited. Furthermore, a screw 1003 is attracted to the tip of the screwdriver 1001 by magnetic force. Therefore, in the confirmation process, it is desirable that the physical phenomenon in the real world is reproduced as much as possible so that workability close to that in the real world can be reproduced and confirmed as much as possible.

On the other hand, in the design process, the arrangement and the like of each virtual object are frequently changed in the XR space, and thus there is a case where it is desired that the virtual object behaves differently from the physical phenomenon in the real world.

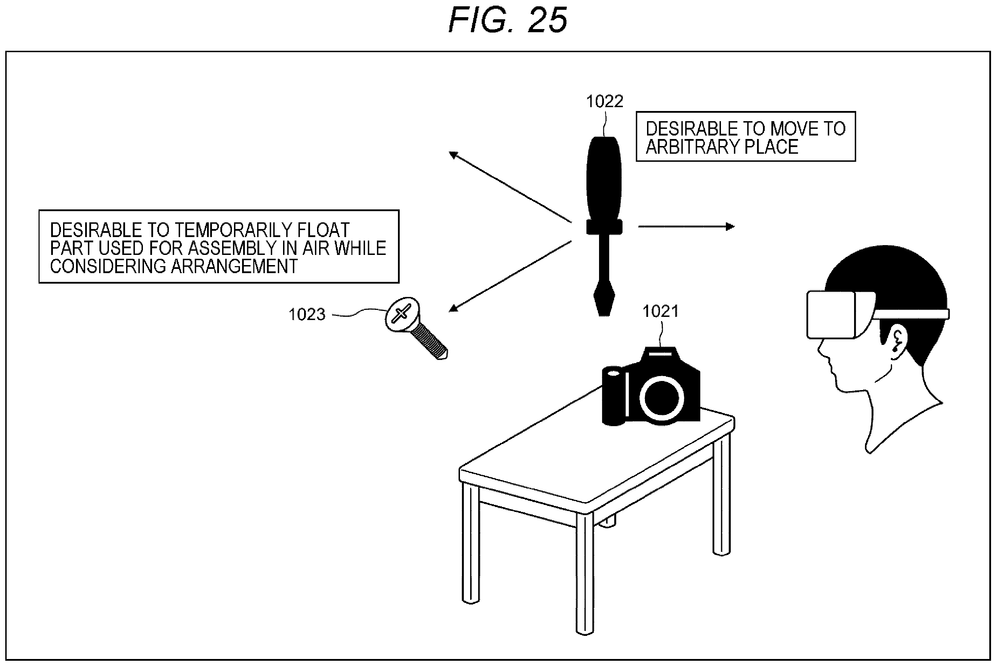

For example, as illustrated in Fig. 25, it is desirable that a tool such as a virtual screwdriver 1022 used for assembling the virtual product 1021 and a part such as a virtual screw 1023 can be moved or arranged to or in an arbitrary place in the air and the like.

On the other hand, the XR system 101 controls the physical laws applied to each virtual object so that each virtual object in the XR space exhibits a behavior desired by the user in the design process and the confirmation process, for example.

Note that the physical laws applied to the virtual object are not all physical laws in the real world, but are limited to, for example, a range of physical laws which can be reproduced in the XR space, such as gravity, magnetic force, elasticity, frictional force, and interference between virtual objects.

### <Virtual object behavior control processing>

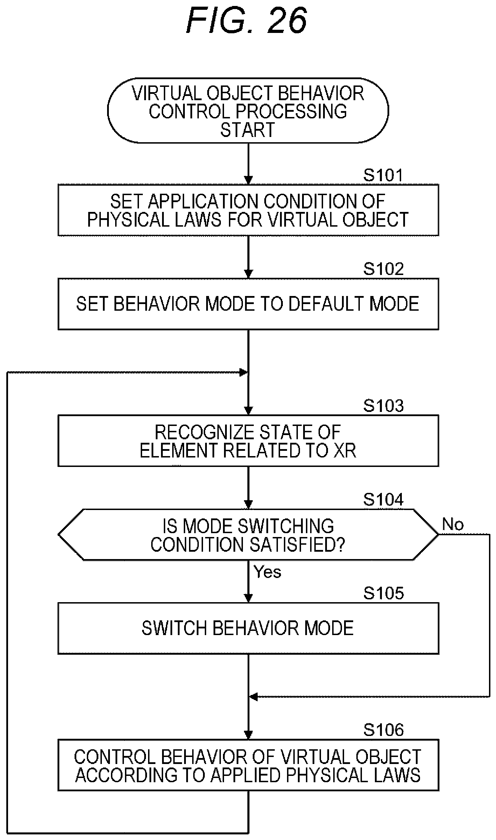

Here, virtual object behavior control processing executed in a case where line design is performed in the XR system 101 will be described with reference to the flowchart of Fig. 26.

This processing is started, for example, when the line design work using the XR system 101 is started, and ends when the line design work ends.

In step S101, the XR system 101 sets an application condition of the physical laws for the virtual object.

For example, the user performs a setting operation of the application condition of the physical laws to the virtual object in the XR space or inputs information indicating the application condition of the physical laws via the operation input unit 201 of the information processing apparatus 111.

The space control unit 223 of the information processing apparatus 111 sets the application condition of the physical laws to the virtual object in the XR space on the basis of the setting operation by the user and the information input by the user.

Note that, for example, the space control unit 223 may acquire, from the outside, information used for setting the application condition of the physical laws to the virtual object in the XR space by downloading the information from a server or the like.

For example, the space control unit 223 sets a switching condition of a behavior mode of the XR space.

Here, the behavior mode is a mode used for controlling the behavior of the virtual object in the XR space. For example, the behavior mode includes two modes of a physical law OFF mode and a physical law ON mode.

The physical law OFF mode is a mode in which the physical laws are not applied to the virtual object in the XR space. The physical law ON mode is a mode in which the physical laws are applied to the virtual object in the XR space.

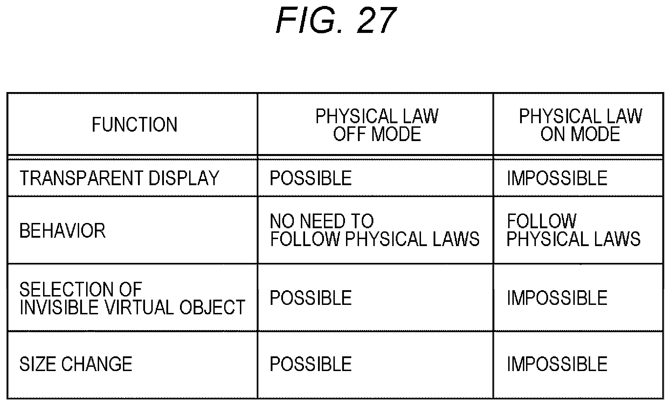

Fig. 27 illustrates an example in which the functions of the physical law OFF mode and the physical law ON mode are compared.

In the physical law OFF mode, transparent display of the virtual object is possible. For example, in the XR space, it is possible to make the virtual object transparent and display what is behind or inside the virtual object.

In the physical law OFF mode, transparent display of the virtual object is impossible.

In the physical law OFF mode, the behavior of the virtual object may not follow the physical laws. For example, in the XR space, the virtual object may not operate according to the physical laws such as gravity or magnetic force. For example, the user can freely move the virtual object in the XR space, and can freely change the position or orientation of the virtual object.

In the physical law ON mode, the behavior of the virtual object follows the physical laws. For example, in the XR space, the virtual object operates according to the physical laws such as gravity and magnetic force. For example, in the XR space, the user can move the virtual object within a range of the restriction based on the physical laws, and can change the position or orientation of the virtual object within the range of the restriction based on the physical laws.

In the physical law OFF mode, it is possible to select a virtual object that is not visible. For example, the user can select, in the XR space, a virtual object that is hidden behind another virtual object or the like and thus is not visible.

In the physical law ON mode, it is not possible to select a virtual object that is not visible. For example, the user cannot select, in the XR space, a virtual object that is hidden behind another virtual object or the like and thus is not visible.

In the physical law OFF mode, the size of the virtual object can be changed. For example, the user can freely change the size while displaying the virtual object in the XR space.

In the physical law ON mode, the size of the virtual object cannot be changed. For example, the size of the virtual object is fixed to a preset value, and the user cannot freely change the size of the virtual object in the XR space. For example, in order to change the size of the virtual object, an operation such as stopping the display of the virtual object and changing the setting value is required.

Note that in the physical law ON mode, the physical laws do not necessarily need to be applied to all virtual objects. For example, in the physical law ON mode, a virtual object to which the physical laws are applied may be set. In this case, for example, virtual objects to which the physical laws are applied may be individually set, or may be set for each type of virtual object.

Furthermore, in the physical law ON mode, all the physical laws may not necessarily be applied. For example, the type of the physical laws to be applied in the physical law ON mode may be set. In this case, for example, the type of the physical laws to be applied may be set for each individual virtual object, or the type of the physical laws to be applied may be set for each type of virtual object.

Moreover, in the physical law ON mode, the physical laws may not always be applied. For example, in the physical law ON mode, a condition for applying the physical laws may be set. In this case, a condition for applying the physical laws may be set for each individual virtual object, or a condition for applying the physical laws may be set for each type of virtual object.

In step S102, the space control unit 223 of the information processing apparatus 111 sets the behavior mode to a default mode. That is, the space control unit 223 sets the behavior mode to a mode set as a default among the physical law OFF mode and the physical law ON mode.

In step S103, the recognition unit 221 of the information processing apparatus 111 recognizes a state of an element related to XR. For example, the recognition unit 221 recognizes the state of the terminal apparatus 112, the state around the terminal apparatus 112, the state of the controller device 113, the state of the user, the user operation, the state of the XR space, and the like, on the basis of at least one of an operation input signal from the operation input unit 201, sensing data transmitted from the terminal apparatus 112, a controller signal transmitted from the controller device 113, information from the operation control unit 222, or information from the space control unit 223. The state of the XR space includes the state of each virtual object in the XR space.

In step S104, the space control unit 223 of the information processing apparatus 111 determines whether or not the mode switching condition is satisfied, on the basis of the recognition result of the state of the element related to XR. In a case where it is determined that the mode switching condition is satisfied, the processing proceeds to step S105.

In step S105, the space control unit 223 of the information processing apparatus 111 switches the behavior mode. For example, in a case where the current behavior mode is the physical law OFF mode, the mode is changed to the physical law ON mode. For example, in a case where the current behavior mode is the physical law ON mode, the mode is changed to the physical law OFF mode.

Thereafter, the processing proceeds to step S106.

On the other hand, in a case where it is determined in step S104 that the mode switching condition is not satisfied, the processing in step S105 is skipped, and the processing proceeds to step S106.

In step S106, the space control unit 223 of the information processing apparatus 111 controls the behavior of the virtual object in the XR space according to the applied physical laws. For example, the space control unit 223 controls the display unit 254 of the terminal apparatus 112 to control the behavior of each virtual object according to the physical laws applied to each virtual object in the XR space.

The following is an example of the behavior of the virtual object in the XR space in a case where the physical law OFF mode is set.

For example, the virtual object can be moved to an arbitrary position or localized regardless of the presence or absence of interference with another virtual object or a real object, and the like. Specifically, for example, virtual products, jigs, tools (for example, a screwdriver, tweezers, a hammer, and the like), parts (for example, a screw and the like), and the like can be localized in the air without following gravity. For example, virtual products, jigs, tools, parts, and the like can be moved to an arbitrary position in order to adjust a position and a movable range. For example, a virtual seal and virtual tweezers can be moved to arbitrary positions during the consideration of the attachment position of the virtual seal and the placement of the virtual tweezers.

For example, a virtual screw is not attracted to a virtual screwdriver.

For example, a virtual object that is not used for consideration can be hidden.

Therefore, the user can perform design work in an environment suitable for line design in which application of real-world physical laws is unnecessary.

The following is an example of the behavior of the virtual object in the XR space in a case where the physical law ON mode is set.

For example, the virtual object moves within a range in which the virtual object does not interfere with another virtual object or a real object. For example, the virtual screwdriver moves only within a range corresponding to a suspended virtual spring.

For example, the positions of the virtual product and the jig are fixed.

For example, the virtual object falls or rolls according to gravity.

For example, the virtual screw is attracted to the virtual screwdriver by magnetic force.

For example, the virtual screw can be inserted only in an appropriate direction with respect to a virtual assembly object.

For example, in a case where a seal is attached to a virtual target to be assembled, fine adjustment of the position becomes difficult due to adhesive force after the attachment is started.

By applying these physical laws, the user can perform work such as confirmation of assemblability and maintainability in an environment close to the real world.

Note that the space control unit 223 controls the behavior of the virtual object on the basis of the recognition result of the state of the XR space (the state of the virtual space and the real section), for example. For example, in a case where gravity is applied to the virtual object, the space control unit 223 recognizes the position or range of a floor on the basis of the state of the XR space, and controls the behavior of the virtual object so as to fall on the floor, on the basis of the recognition result.

Thereafter, the processing returns to step S103, and the processing of steps S103 to S106 is repeatedly executed.

### <Specific example of virtual object behavior control processing>

Next, a specific example of each processing of the virtual object behavior control processing described above will be described with reference to a flowchart of Fig. 26.

### <Specific example of mode switching condition>

First, a specific example of the behavior mode switching condition will be described.

For example, the behavior mode is switched on the basis of at least one of the state of the XR space or the state of the user using the XR space. The state of the XR space includes, for example, at least one of the state or the attribute of the virtual object in the XR space. The state of the virtual object includes, for example, at least one of an operation method for the virtual object or the position of the virtual object in the XR space. The operation method for the virtual object includes, for example, at least one of a type, an attribute, or a use method (for example, how to hold) of a real or virtual tool used for operating the virtual object.

### <Example of switching behavior mode on basis of tool used for operation of virtual object>

Specifically, for example, the behavior mode may be switched on the basis of the tool used for the operation of the virtual object.

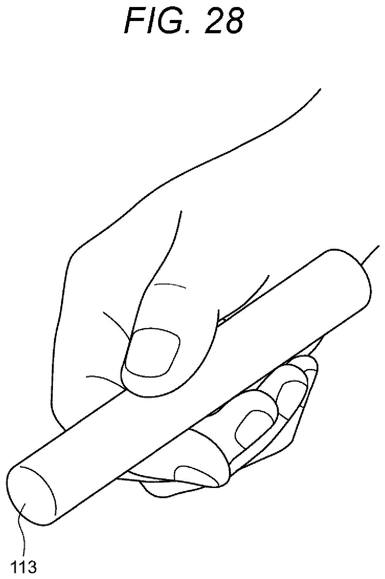

For example, as schematically illustrated in Figs. 28 to 30, the behavior mode may be switched on the basis of a use method of the controller device 113, more specifically, how to hold the controller device 113.

For example, in the design process, it is assumed that the virtual object is operated by using a pointing device such as a laser pointer.

On the other hand, for example, as illustrated in Fig. 28, in a case where the controller device 113 is grasped in a holding manner imitating that of a laser pointer, in other words, in a case where the controller device 113 is grasped as if holding a laser pointer, the behavior mode may be set to the physical law OFF mode. In this case, for example, a ray that is a virtual light beam may be output from the tip of the controller device 113, and the virtual object may be operated using the ray.

For example, in the confirmation process, it is assumed that a virtual object is operated using an input device imitating a real tool such as a screwdriver or tweezers.

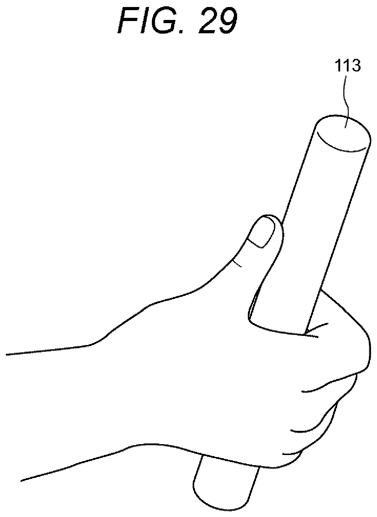

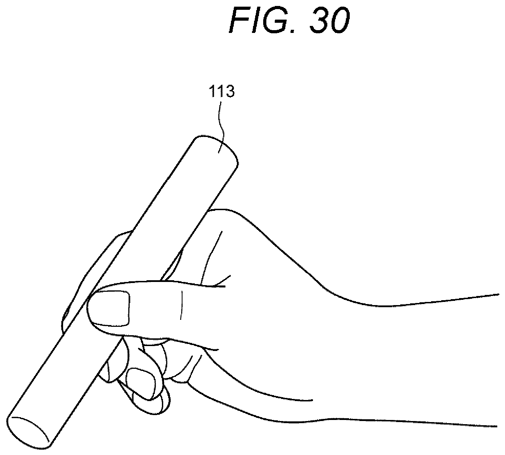

On the other hand, for example, in a case where the controller device 113 is grasped in a holding manner imitating that of a real tool, in other words, in a case where the controller device 113 is grasped as if holding a real tool, the behavior mode may be set to the physical law ON mode. For example, in a case where a controller device 113c is grasped as if holding a screwdriver as illustrated in Fig. 29 or the controller device 113c is grasped as if holding tweezers as illustrated in Fig. 30, the behavior mode may be set to the physical law ON mode.

Next, a specific example of the behavior mode switching condition will be described with the more specific controller device 113 as an example.

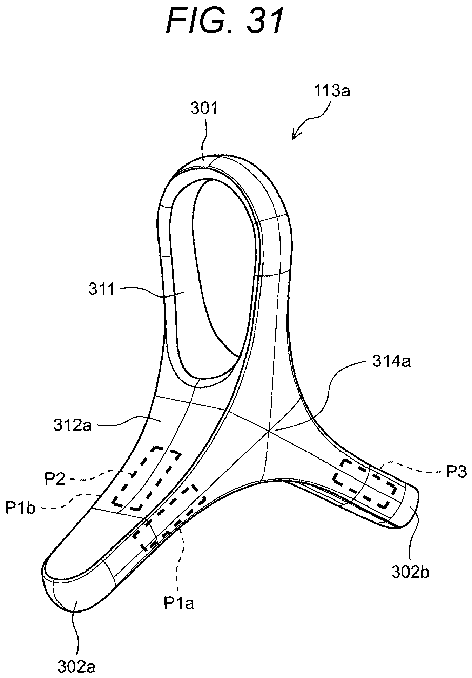

First, an example of the behavior mode switching condition in the case of using the controller device 113a described above with reference to Fig. 5 and the like will be described with reference to Figs. 31 to 34.

Fig. 31 illustrates an arrangement example of capacitive touch sensors and buttons of the controller device 113a.

For example, a touch sensor is arranged at a position P1a near the center of the right side surface of the operation portion 302a in the front-rear direction. A touch sensor and a button are arranged at a position P1b (only a reference numeral is illustrated) near the center of the left side surface of the operation portion 302a, which is the opposite side of the position P1a, in the front-rear direction. A touch sensor and a button are arranged at a position P2 near the center of the upper surface 312a of the operation portion 302a in the front-rear direction. A touch sensor is arranged near the center of the right side surface of the holding portion 302b in the front-rear direction.

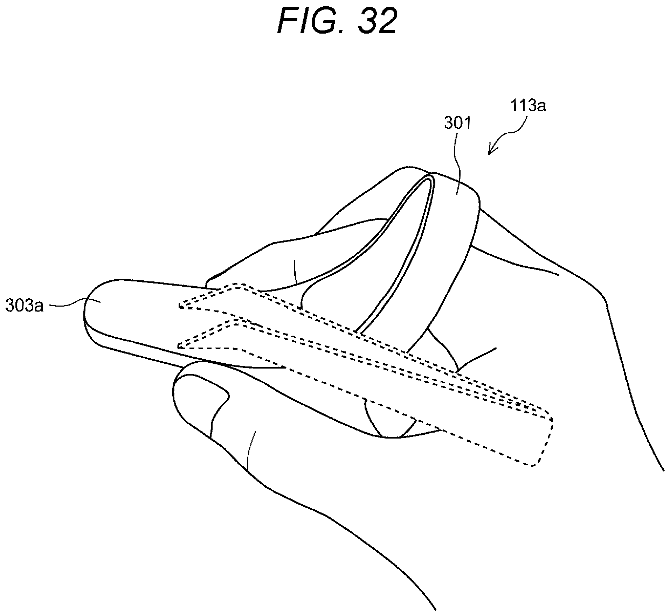

For example, in a case where the touch sensor at the position P1b reacts, the recognition unit 221 of the information processing apparatus 111 recognizes that the controller device 113a is grasped as if holding tweezers as illustrated in Fig. 32. That is, it is recognized that the controller device 113a is grasped such that the side surface of the operation portion 302 is sandwiched between the thumb and the index finger of the right hand without inserting a finger into the ring portion 301. In this case, the behavior mode is set to the physical law OFF mode. Furthermore, the operation control unit 222 of the information processing apparatus 111 assigns a determination function to the button at the position P1b, and the determination function is operated by the index finger.

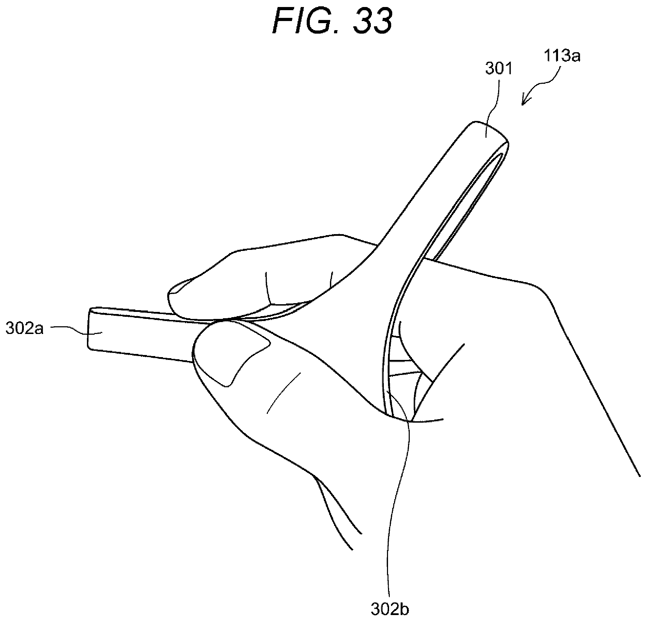

For example, in a case where the touch sensor at the position P1a reacts and the touch sensor at the position P1b does not react, the recognition unit 221 recognizes that the controller device 113a is grasped in a normal holding manner as illustrated in Fig. 33. That is, it is recognized that the controller device 113a is grasped in the forward direction with the right hand in a method similar to that described above with reference to Fig. 6. In this case, the behavior mode is set to the physical law ON mode. Furthermore, the operation control unit 222 assigns the determination function to the button at the position P2, and the determination function is operated by the index finger.

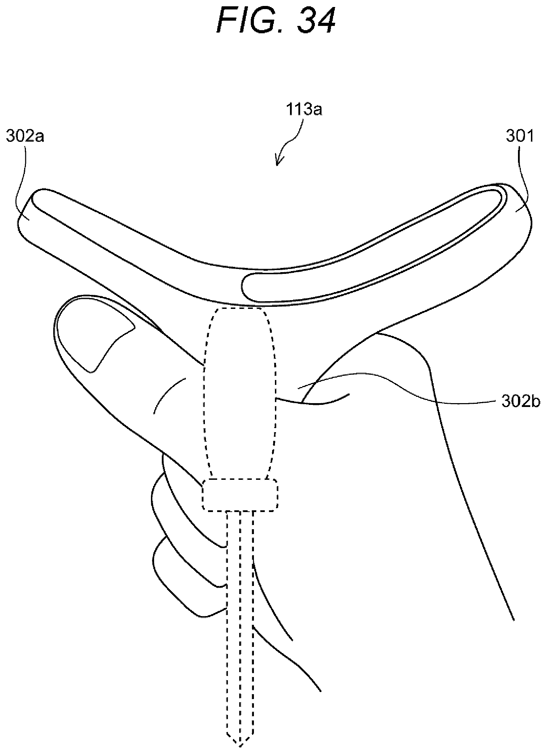

For example, in a case where the touch sensor at the position P3 reacts and the touch sensors at the positions P1a and P1b do not react, the recognition unit 221 recognizes that the controller device 113a is grasped as if holding the screwdriver as illustrated in Fig. 34. That is, it is recognized that the controller device 113a is grasped so as to grab the holding portion 302b with the right hand. In this case, the behavior mode is set to the physical law ON mode.

For example, in a case where the touch sensors at the position P1a, the position P1b, and the position P3 do not react, the recognition unit 221 recognizes that the controller device 113a is not grasped.

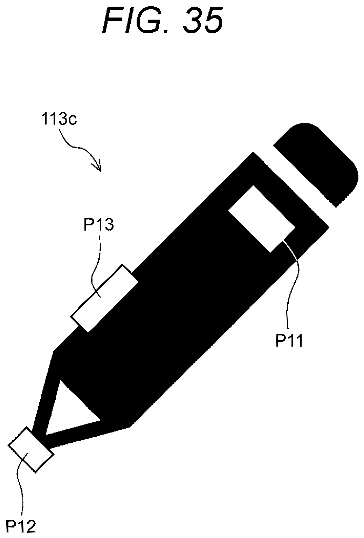

Next, an example of the behavior mode switching condition in the case of using the controller device 113c that is a pen-shaped input device will be described with reference to Fig. 35.

Fig. 35 illustrates an arrangement example of capacitive touch sensors and buttons of the controller device 113c.

For example, a touch sensor is arranged at a position P11 near the end on the upper side (upper surface) of the side surface of the controller device 113c. For example, a touch sensor is arranged at the position P2 at the tip of the controller device 113c. For example, a touch sensor and a button are arranged at a position P13 near the tip on the left side (left side surface) of the side surface of the controller device 113c.

For example, in a case where the touch sensor at the position P11 reacts, the recognition unit 221 of the information processing apparatus 111 recognizes that the controller device 113c is grasped as if holding the screwdriver. That is, it is assumed that the controller device 113c is gripped to the vicinity of the end only in the case of holding a screwdriver or the like. In this case, the behavior mode is set to the physical law ON mode.

For example, in a case where the touch sensors at the position P12 and the position P13 react and the touch sensor at the position P11 does not react, the recognition unit 221 recognizes that the controller device 113c is grasped as if holding the laser pointer. In this case, the behavior mode is set to the physical law OFF mode.

For example, in a case where the touch sensor at the position P13 reacts and the touch sensors at the position P11 and the position P12 do not react, the recognition unit 221 recognizes that the controller device 113c is grasped as if holding the tweezers. In this case, the behavior mode is set to the physical law ON mode.

For example, the behavior mode may be switched on the basis of an attribute (for example, a shape, a type, and the like) of a tool used for operating the virtual object.

For example, in a case where the controller device 113 is deformable, the behavior mode may be switched on the basis of the shape of the controller device 113. For example, in a case where the shape of the controller device 113 becomes a shape close to that of a real tool, the behavior mode may be set to the physical law ON mode. Specifically, for example, in a case where the controller device 113 is shaped like tweezers, the behavior mode is set to the physical law ON mode. For example, in a case where the controller device 113 extends like a pointing rod, the behavior mode may be set to the physical law OFF mode.

Note that, also in a case where a virtual tool is used instead of the controller device 113, the behavior mode may be similarly switched on the basis of the shape of the virtual tool.

For example, in a case where a virtual object is operated by a real tool (for example, a screwdriver, tweezers, a hammer, and the like), the behavior mode may be set to the physical law ON mode.

Note that, for example, in a case where a real tool is used, by providing a marker in the tool and registering information regarding the marker in the information processing apparatus 111, the recognition unit 221 of the information processing apparatus 111 may recognize the presence, position, and orientation of the real tool on the basis of the marker.

### <Example of switching behavior mode on basis of user state>

For example, the behavior mode may be switched on the basis of the state of the user.

Specifically, for example, a case where CAD design is performed using the XR system 101, a case where the information processing apparatus 111 is used alone, a case where the operation input unit 201 of the information processing apparatus 111 and the terminal apparatus 112 are used, and a case where the terminal apparatus 112 and the controller device 113 are used are assumed.

On the other hand, for example, in the CAD design using the operation input unit 201 of the information processing apparatus 111 and the terminal apparatus 112, the behavior mode may be switched on the basis of the gesture of the user by utilizing the hand tracking.

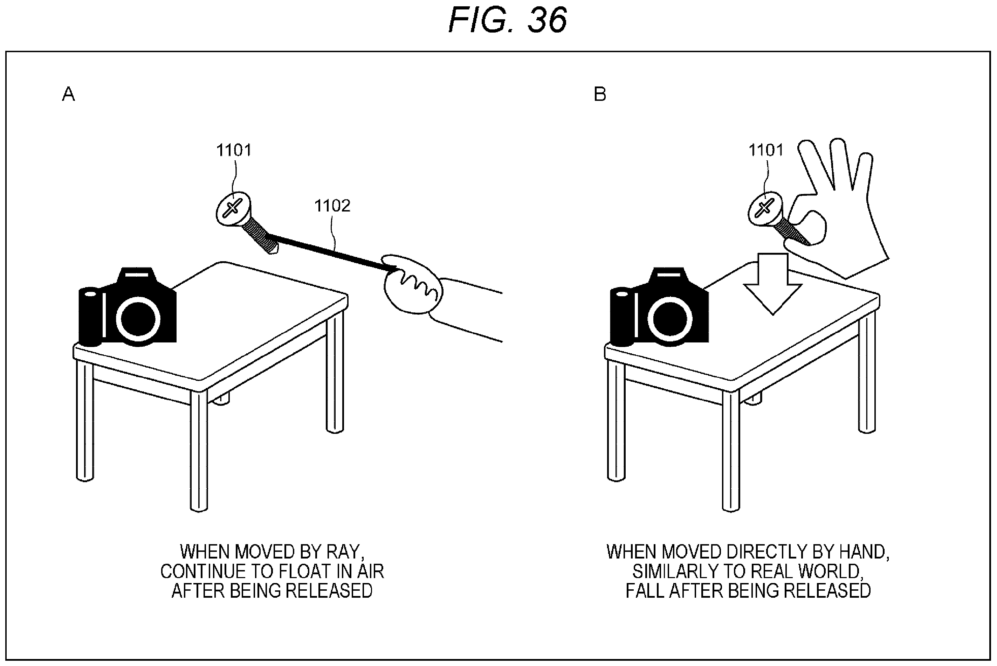

For example, as illustrated in A of Fig. 36, in a case where a virtual object is operated using a ray, the behavior mode may be set to the physical law OFF mode. For example, in a case where a virtual screw 1101 is moved by a ray 1102, the virtual screw 1101 continues to float in the air after the virtual screw 1101 is released.

For example, as illustrated in B of Fig. 36, in a case where a virtual object is directly operated by the user's hand, the behavior mode may be set to the physical law ON mode. For example, in a case where the virtual screw 1101 is moved by hand, the virtual screw 1101 falls similarly to that in the real world after the virtual screw 1101 is released.

For example, the behavior mode may be switched on the basis of the action of the user. For example, in a case where the user performs an operation of assembling a product on a real line, the behavior mode may be set to the physical characteristics ON mode. Specifically, for example, in a case where the user stands up from a chair or crouches on the floor, the behavior mode may be set to the physical characteristics ON mode.

For example, the behavior mode may be switched on the basis of whether or not the user is operating with the dominant hand. For example, in a case where a condition for setting to the physical law ON mode is satisfied, when the user performs an operation with the hand opposite to the dominant hand due to injury or the like, the behavior mode may be set to the physical law OFF mode in consideration of the operability of the user.

Note that, for example, the user may set the dominant hand in advance, or the learning unit 226 of the information processing apparatus 111 may learn the hand often used by the user and automatically recognize the dominant hand.

For example, the behavior mode may be switched on the basis of the position where the user uses XR.

For example, in a case where XR is used in a place where the user is assumed to perform the design process (for example, an office or the like), the behavior mode may be set to the physical law ON mode. On the other hand, for example, in a case where XR is used at a place where the user is assumed to perform the confirmation process (for example, a factory line, an aircraft hangar, or the like), the behavior mode may be set to the physical law OFF mode.

### <Example of switching behavior mode on basis of state of virtual object>

For example, the behavior mode may be switched on the basis of the state of the virtual object in the XR space.

Specifically, for example, the behavior mode may be switched on the basis of a position where a virtual design target is placed in the XR space.

For example, in a case where a virtual camera being designed is placed on a table, it is estimated that the user is confirming the assemblability of the camera, and thus the behavior mode may be set to the physical law ON mode.

For example, in a case where a virtual vehicle being designed is placed on a floor and the user is in the driver's seat or the passenger's seat, it is estimated that the user is confirming the assemblability of a vehicle, and thus the behavior mode may be set to the physical law ON mode.

### <Example of switching behavior mode on basis of background of XR (VR)>

For example, in a case where the user uses VR, the behavior mode may be switched on the basis of the background of VR (virtual background).

For example, in a case where the background of VR is a place where the user is assumed to perform the design process (for example, an office or the like), the behavior mode may be set to the physical law ON mode. On the other hand, for example, in a case where the background of VR is a place where the user is assumed to perform the confirmation process (for example, a factory line, an aircraft hangar, or the like), the behavior mode may be set to the physical law OFF mode.

### <Example of manually setting behavior mode>

For example, the user may set the behavior mode.

Note that, in this case, for example, the space control unit 223 of the information processing apparatus 111 may set the physical law ON mode every predetermined period. Therefore, for example, it is possible to prompt the user to execute the confirmation process without only executing the design process.

For example, in a case where the behavior mode switching condition is satisfied, the space control unit 223 may suggest that the user switch the behavior mode without automatically switching the behavior mode. For example, the space control unit 223 may display a window for selecting whether or not to change the behavior mode, a button for changing the behavior mode, and the like in the XR space, and suggest that the user switch the behavior mode. For example, the space control unit 223 may suggest that the user switch the behavior mode by an audio message.

Then, the space control unit 223 may control switching of the behavior mode according to the selection of the user. For example, the space control unit 223 may switch the behavior mode in a case where the user selects the switching of the behavior mode, and may continue a current behavior mode in a case where the user does not select the switching of the behavior mode.

For example, in a case where the switching of the behavior mode is suggested, the space control unit 223 may set a timing to switch the behavior mode without immediately switching the behavior mode. For example, the space control unit 223 may be able to set a time until the behavior mode is switched (for example, how many minutes later from now, or the like) or a time at which the behavior mode is switched.

For example, the space control unit 223 may suggest that the user switch the behavior mode without automatically switching the behavior mode in a predetermined period (for example, one month) after the behavior mode switching function is enabled. Then, for example, the space control unit 223 may automatically switch the behavior mode in a case where a probability of following the suggestion of the behavior mode is equal to or greater than a predetermined threshold at a time point when a predetermined period has elapsed.

For example, automatic switching and manual switching of the behavior mode may be switched depending on a condition. For example, the behavior mode may be automatically switched in a case where a preset condition is satisfied, and the behavior mode may not be automatically switched in a case where the preset condition is not satisfied.

### <Specific example of application condition of physical laws>

Next, an example will be described in which the application of the physical laws for each virtual object is controlled in the physical law ON mode.

For example, similarly to the case of switching the behavior mode described above, the application of the physical laws is controlled for each virtual object on the basis of at least one of the state of the XR space or the state of the user using the XR space.

### <Example of controlling application of physical laws on basis of attribute of virtual object>

For example, the type of the applied physical laws may be controlled on the basis of the attribute (for example, a type, a material, a shape, a size, a friction coefficient, and the like) of the virtual object.

For example, in a case where the virtual object includes metal, magnetic force may be applied, and in a case where the virtual object does not include metal, the magnetic force may not be applied. Specifically, for example, in a case where the virtual screw includes metal, magnetic force may be applied, and in a case where the virtual screw does not include metal, the magnetic force may not be applied.

For example, the presence or absence of application of magnetic force or gravity may be switched on the basis of the size of the virtual object. For example, the magnetic force may be applied in a case where the size of the virtual screw is less than a predetermined threshold, and the magnetic force may not be applied in a case where the size of the virtual screw is equal to or larger than the predetermined threshold. For example, the gravity may be applied in a case where the size of the virtual object is equal to or larger than a predetermined threshold (for example, one side is 1 m or more), and the gravity may not be applied in a case where the size of the virtual object is less than the predetermined threshold.

For example, the presence or absence of application of the physical laws may be switched on the basis of the display size of the virtual object in the XR space. For example, in a case where a difference between the display size of the virtual object and the size of the corresponding real object is within a predetermined range, the physical laws may be applied to the virtual object. On the other hand, for example, in a case where the difference between the display size of the virtual object and the size of the corresponding real object exceeds a predetermined range, the physical laws may not be applied to the virtual object.

### <Example of controlling application of physical laws on basis of operation method for virtual object>

For example, the presence or absence of application of the physical laws may be switched on the basis of the operation method of the user for the virtual object.

For example, when the user handles the virtual object carefully (for example, when gently placing on a desk or the like), the physical laws may be applied to the virtual object. On the other hand, for example, when the user handles the virtual object roughly (for example, when throwing a ball), the physical laws may not be applied to the virtual object.

This is because, for example, it is assumed that in a case where the user wants to move the virtual object aside in the design process, the user quickly moves the virtual object.

For example, the presence or absence of the application of the physical laws to the virtual object may be switched on the basis of the gesture of the user to the virtual object. For example, in a case where the user performs a gesture of picking or a gesture of gripping a doorknob on the virtual object, the physical laws may be applied to the virtual object.

### <Display example of virtual object>

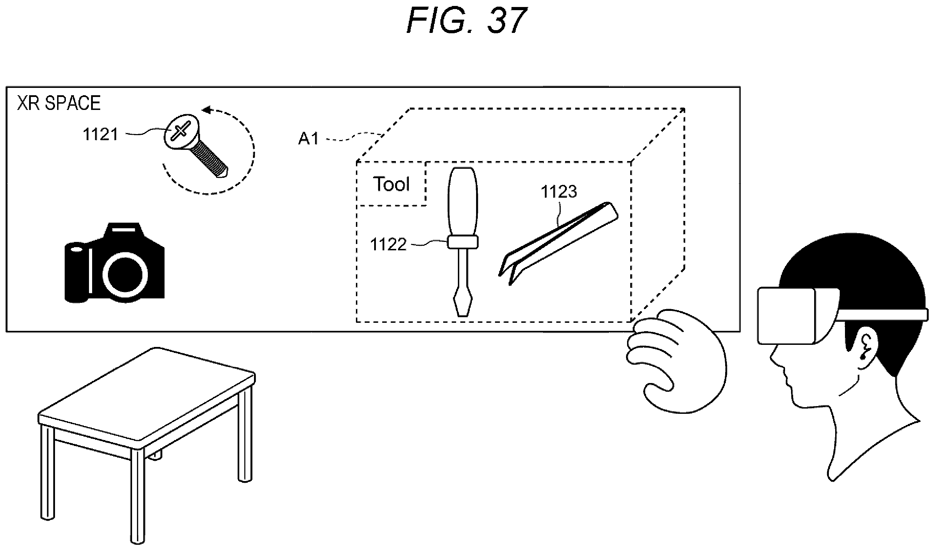

For example, the space control unit 223 of the information processing apparatus 111 may distinguish between the display mode of the virtual object to which the physical laws are applied and the display mode of the virtual object to which the physical laws are not applied in the XR space. For example, the space control unit 223 may change the transparency of the virtual object to which the physical laws are applied and the transparency of the virtual object to which the physical laws are not applied. For example, as illustrated in Fig. 37, a virtual screw 1121 to which the physical laws are not applied may rotate slowly in the air.

Therefore, the user can easily distinguish between the virtual object to which the physical laws are not applied and the virtual object to which the physical laws are not applied, and the operability is improved.

For example, in the physical law OFF mode, the space control unit 223 may change the display mode of the virtual object to which the physical laws are applicable and the display mode of the virtual object to which the physical laws are not applicable in the XR space. For example, the space control unit 223 may change the transparency of the virtual object to which the physical laws are applicable and the transparency of the virtual object to which the physical laws are not applicable.

Therefore, before setting to the physical law ON mode, the user can easily distinguish between the virtual object to which the physical laws are applicable and the virtual object to which the physical laws are not applicable, and can use the result for determination on the switching of the behavior mode and the like.

For example, as illustrated in Fig. 37, an area A1 in which virtual tools such as a virtual screwdriver 1122 and virtual tweezers 1123 are placed may be displayed in the XR space. Then, for example, when the user holds a virtual tool in the area A1, the physical laws corresponding to the tool held by the user (the tool used by the user) may be applied to the virtual object in the XR space.

For example, in a case where the user holds and operates the virtual screwdriver 1122, the virtual screw 1121 is attracted toward the screwdriver 1122 by magnetic force, but in a case where the user holds and operates the virtual tweezers 1123, the virtual screw 1121 may not be attracted toward the tweezers 1123.

### <Learning processing for application condition of physical laws>

For example, the learning unit 226 of the information processing apparatus 111 may learn the application condition of the physical laws for the virtual object on the basis of the use history of the user and the like.

For example, the learning unit 226 may learn the user's preference for the physical laws applied to the virtual tool on the basis of the use history of the virtual tool of the user.

For example, in a case where the magnetic force is applied to the virtual screwdriver by default, or it is suggested by default that the magnetic force be applied to the virtual screwdriver, when the user makes a selection not to apply the magnetic force to the virtual screwdriver a predetermined number or more of times or at a probability equal to or larger than a predetermined threshold, the learning unit 226 learns that the user prefers a non-magnetic screwdriver. Then, for example, the space control unit 223 does not apply a magnetic force to the virtual screwdriver for the user on the basis of the learning result. Therefore, the operability for a user who prefers a non-magnetic screwdriver is improved.

For example, the space control unit 223 may apply, to another virtual tool, the learning result regarding the application of the physical laws to a certain virtual tool. For example, in a case where the learning unit 226 learns not to apply gravity to the virtual screwdriver, the space control unit 223 may not apply gravity to another tool (for example, tweezers and the like).

For example, the learning unit 226 may learn the physical laws to be applied to the virtual tool, not for each user but for each group.

Note that a method of classifying the groups is not particularly limited. For example, the groups are classified by workplace, department, school, and class. Furthermore, for example, it is assumed that the groups are formed via a network.

In this case, in a case where a new user joins the group, the physical laws are applied to the virtual tool used by the new user on the basis of the learning result in the group. For example, in a case where the magnetic force is set not to be applied to the virtual screwdriver in the group, the setting is also applied to the new user.

### <Application example of physical laws in case where XR space is shared by plurality of users>

For example, in a case where a plurality of users shares the XR space and operates the same virtual object, when the physical laws applied to the virtual object are different for each user, the behavior of the virtual object is different for each user. As a result, for example, a phenomenon may occur in which different videos are seen between users in the same XR space. For example, a situation may occur in which the virtual object for a certain user falls on the floor according to the physical laws while the virtual object for another user floats in the air without following the physical laws.

On the other hand, in a case where a plurality of users operates the same virtual object, the physical laws applied to the virtual object may be common between the users. For example, in a case where the switching condition is satisfied for all the users, the presence or absence of application of the physical laws and the type of the physical laws to be applied may be changed. For example, only a specific user can set the presence or absence of application of the physical laws and the type of the physical laws to be applied, and another user may follow the setting of the user. For example, the priority of users may be set, and a user with a low priority may follow the setting of a user with a high priority.

As described above, appropriate physical laws are applied to each virtual object in the XR space at an appropriate timing. For example, in a scene in which the intention of the user to execute the design process is estimated, the physical laws are not applied to the virtual object, and in a scene in which the intention of the user to execute the confirmation process is estimated, the physical laws are applied to the virtual object. Furthermore, the application of the physical laws is seamlessly switched between the design process and the confirmation process, and as a result, the behavior of the virtual object is seamlessly switched. Therefore, the operability of the user is improved.

### <<3. Modifications>>

Hereinafter, modifications of the embodiment of the present technology described above will be described.

### <Modification regarding controller device 113a>

In the above description, an example has been described in which the controller device 113a can be grasped in either the forward or rear direction. However, for example, it is also possible to set the controller device so as to be grasped only in the forward direction.

In this case, the operation portion 302a and the holding portion 302b do not necessarily have symmetrical shapes about the ring portion 301, and for example, the operation portion 302a and the holding portion 302b may have different shapes. Furthermore, the operation member 332b and the operation member 333b of the holding portion 302b can be removed.

For example, a material, such as metal, other than resin can be used for the controller device 113a.

### <Modification regarding sharing of processing>

For example, a part of the processing of the information processing apparatus 111 may be executed by the terminal apparatus 112.

For example, the terminal apparatus 112 may execute all or part of the processing of the information processing unit 211 of the information processing apparatus 111. For example, the terminal apparatus 112 may independently present the XR space without being controlled by the information processing apparatus 111. For example, the information processing apparatus 111 and the terminal apparatus 112 may independently share and execute processing such as construction of the XR space.

### <Modification regarding virtual object behavior control processing>

For example, the physical law ON mode may be classified into two or more modes, and the type of the physical laws applied to each mode or the type of the virtual object to which the physical laws are applied may be switched.

For example, without providing the behavior mode, the space control unit 223 of the information processing apparatus 111 may control, for each virtual object or for each type of virtual object, the physical laws to be applied.

In the above description, an example has been described in which the virtual object behavior control processing described above with reference to Fig. 26 is applied to line design using three-dimensional CAD, but the virtual object behavior control processing can also be applied to another application using three-dimensional CAD.

For example, in a case where a product is developed by using three-dimensional CAD, the behavior mode may be switched between the design process of designing a product and the confirmation process of confirming assemblability and maintainability of the product similarly to the case of the line design described above.

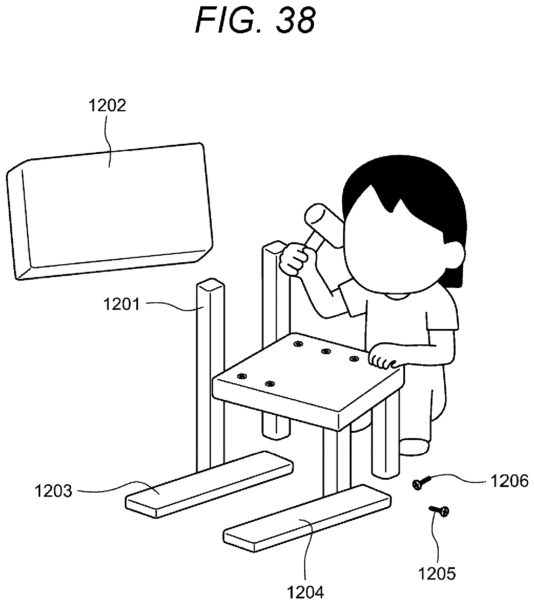

For example, Fig. 38 schematically illustrates a case where a product 1201 (in the case of this example, a chair) is developed using three-dimensional CAD in the XR space.

For example, in the design process, a virtual part 1202 combined with the virtual product 1201 is displayed floating in the air without following gravity. Therefore, the user can quickly combine the product 1201 and the part 1202, and the design work is made efficient.

On the other hand, for example, in the confirmation process, virtual parts 1203 to 1206 combined with the virtual product 1201 fall on the ground without following gravity. Therefore, the user can easily discover problems that occur in reality, such as losing sight of parts at the time of assembling the product 1201.

Furthermore, the virtual object behavior control processing can be applied to, for example, an application in which a scene that needs to follow the physical laws and a scene that does not need to follow the physical laws are mixed in the XR space, or an application in which a space that needs to follow the physical laws and a space that does not need to follow the physical laws are mixed in the XR space.

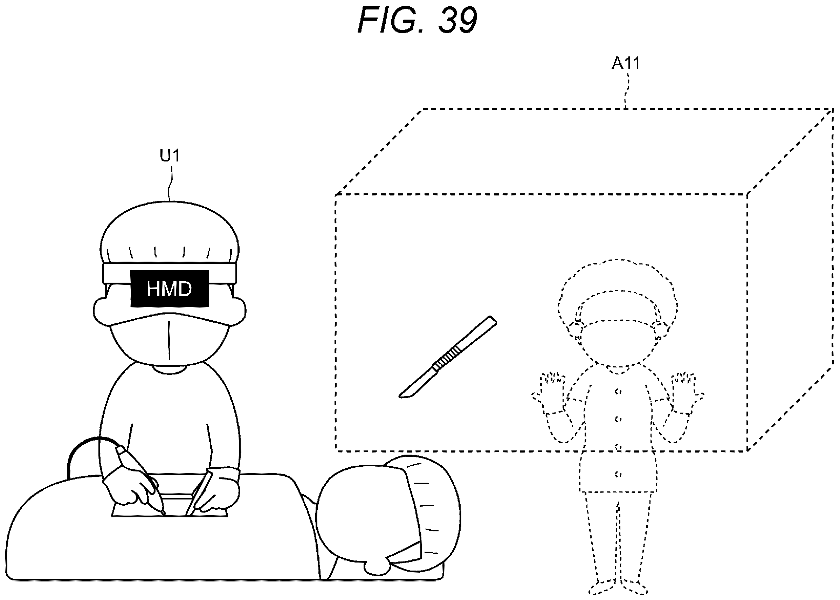

For example, as illustrated in Fig. 39, the virtual object behavior control processing may be used for simulation of surgery using XR.

For example, an area A11 to which the physical laws are not applied is provided beside a user U1 who is a surgeon in the XR space. For example, in a case where a virtual surgical tool such as an electric scalpel or forceps is placed in the area A11, the virtual surgical tool floats in the air or wiring is not drawn.

The area A11 is provided as an image of a surgical nurse. For example, in the real world, it is assumed that the surgical nurse follows the instruction of the user U1 to hand a surgical tool to the user U1 or return the surgical tool received from the user U1 to a predetermined position.

On the other hand, for example, the space control unit 223 of the information processing apparatus 111 may store the order of the surgical tools to be used according to the procedure of the surgery, and arrange the virtual surgical tools in the area A11 according to the stored order in accordance with the progress status of the surgery at the time of executing the simulation of the surgery.

In a region other than the area A11, the physical laws are applied to the virtual surgical tool, or wiring is considered. Therefore, the user U1 can confirm whether or not the surgical tool can be inserted into the patient as assumed, in consideration of the size, orientation, wiring, and the like of the surgical tool, similarly to surgery in the real world.

Note that, for example, only a part of the physical laws may not be applied in the area A11.

### <Other modifications>

For example, the controller device 113a can be used to an operation not only for the XR space but also for a two-dimensional space and a three-dimensional space such as a game.

### <<4. Others>>

### <Configuration example of computer>

The above-described series of processing can be executed by hardware and can also be executed by software. In a case where the series of processing is executed by software, a program constituting the software is installed in a computer. Here, the computer includes a computer incorporated in dedicated hardware, a general-purpose personal computer capable of executing various functions by installing various programs, and the like, for example.

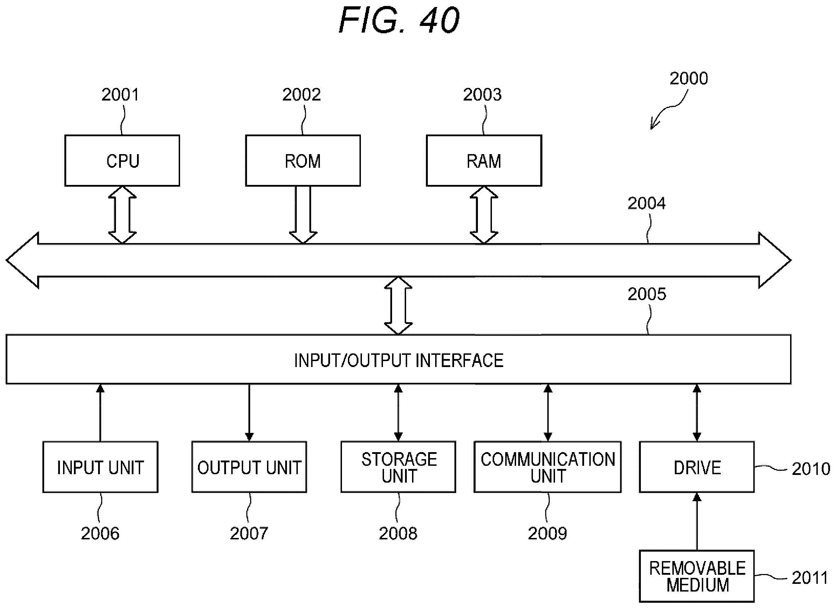

Fig. 40 is a block diagram illustrating a configuration example of hardware of a computer that executes the above-described series of processing with a program.

In a computer 2000, a central processing unit (CPU) 2001, a read only memory (ROM) 2002, and a random access memory (RAM) 2003 are mutually connected by a bus 2004.

An input/output interface 2005 is further connected to the bus 2004. An input unit 2006, an output unit 2007, a storage unit 2008, a communication unit 2009, and a drive 2010 are connected to the input/output interface 2005.

The input unit 2006 includes an input switch, a button, a microphone, an image sensor, and the like. The output unit 2007 includes a display, a speaker, and the like. The storage unit 2008 includes a hard disk, a nonvolatile memory, and the like. The communication unit 2009 includes a network interface and the like. The drive 2010 drives a removable medium 2011 such as a magnetic disk, an optical disk, a magneto-optical disk, or a semiconductor memory.

In the computer 2000 configured as described above, the series of processing described above is performed, for example, by the CPU 2001 loading a program stored in the storage unit 2008 into the RAM 2003 via the input/output interface 2005 and the bus 2004, and executing the program.

The program executed by the computer 2000 (the CPU 2001) can be provided by being recorded on, for example, the removable medium 2011 as a package medium or the like. Furthermore, the program can be provided via a wired or wireless transmission medium such as a local area network, the Internet, or digital satellite broadcasting.

In the computer 2000, the program can be installed in the storage unit 2008 via the input/output interface 2005 by mounting the removable medium 2011 on the drive 2010. Furthermore, the program can be received by the communication unit 2009 via a wired or wireless transmission medium, and be installed into the storage unit 2008. Other than the above, the program can be installed beforehand into the ROM 2002 or the storage unit 2008.

Note that the program executed by the computer may be a program by which processing is performed in time series in the order described herein, or may be a program by which processing is performed in parallel or at necessary timing such as when a call is made or the like.

Furthermore, herein, a system means a set of a plurality of components (apparatuses, modules (parts), or the like), and it does not matter whether or not all the components are in the same housing. Therefore, a plurality of apparatuses housed in separate housings and connected via a network and one apparatus in which a plurality of modules is housed in one housing are both systems.

Moreover, the embodiments of the present technology are not limited to the above-described embodiments, and various modifications can be made without departing from the gist of the present technology.

For example, the present technology may be configured as cloud computing in which a function is shared by a plurality of apparatuses through the network to process together.

Furthermore, each step described in the above-described flowchart can be executed by one apparatus or executed by a plurality of apparatuses in a shared manner.

Moreover, in a case where a plurality of processes is included in one step, the plurality of processes included in one step can be executed by one apparatus or by a plurality of apparatuses in a shared manner.

### <Combination examples of configurations>

The present technology can also have the following configurations.
(1) An information processing apparatus including:
   a recognition unit that recognizes a state of an element related to cross reality (XR); and
   a space control unit that controls physical laws applied to a virtual object in an XR space on the basis of the state of the element related to the XR.
(2) The information processing apparatus according to (1), in which
   the state of the element related to the XR includes at least one of a state of the XR space or a state of a user who uses the XR space, and
   the space control unit controls the physical laws applied to the virtual object on the basis of at least one of the state of the XR space or the state of the user.
(3) The information processing apparatus according to (2), in which
   the state of the XR space includes at least one of a state and an attribute of the virtual object in the XR space or a virtual background in the XR space, and
   the space control unit controls the physical laws applied to the virtual object on the basis of at least one of the state and the attribute of the virtual object in the XR space or the virtual background.
(4) The information processing apparatus according to (3), in which
   the state of the virtual object includes at least one of an operation method for the virtual object or a position of the virtual object in the XR space, and
   the space control unit controls the physical laws applied to the virtual object on the basis of at least one of the operation method for the virtual object or the position of the virtual object in the XR space.
(5) The information processing apparatus according to (4), in which
   the operation method for the virtual object includes at least one of a type, an attribute, or a use method of a tool used for operating the virtual object, and
   the space control unit controls the physical laws applied to the virtual object on the basis of at least one of the type, the attribute, or the use method of the tool.
(6) The information processing apparatus according to (5), in which
   the tool is a real tool or a virtual tool.
(7) The information processing apparatus according to (6), in which
   the real tool includes a real input device,
   a use method of the tool includes how to hold the input device, and
   the space control unit controls the physical laws applied to the virtual object on the basis of how to hold the input device.
(8) The information processing apparatus according to (7), in which
   the input device includes
   a ring portion into which a finger is inserted,
   an operation portion that is operable by the finger inserted into the ring portion, and
   a holding portion that is held by a palm in a case where the operation portion is operated by the finger.
(9) The information processing apparatus according to any one of (6) to (8), in which
   the space control unit applies the physical laws corresponding to the virtual tool to the virtual object.
(10) The information processing apparatus according to any one of (6) to (9), further including:
   a learning unit that learns physical laws applied to the virtual tool with respect to a user on the basis of a use history of the user with respect to the virtual tool.
(11) The information processing apparatus according to any one of (2) to (10), in which
   the state of the user includes at least one of a position, an action, or a gesture of the user, and
   the space control unit controls the physical laws applied to the virtual object on the basis of at least one of the position, the action, or the gesture of the user.
(12) The information processing apparatus according to any one of (1) to (11), in which
   the space control unit switches between a mode in which the physical laws are applied to the virtual object and a mode in which the physical laws are not applied to the virtual object, on the basis of the state of the element related to the XR.
(13) The information processing apparatus according to (12), in which
   the space control unit suggests that a user switch the mode in a case where a condition for switching the mode is satisfied, and controls switching of the mode according to selection of the user.
(14) The information processing apparatus according to any one of (1) to (13), in which
   the space control unit distinguishes between a display mode of the virtual object to which the physical laws are applied and a display mode of the virtual object to which the physical laws are not applied in the XR space.
(15) The information processing apparatus according to any one of (1) to (14), in which
   the space control unit does not apply at least a part of the physical laws to the virtual object in a predetermined area of the XR space.
(16) The information processing apparatus according to any one of (1) to (15), in which
   in a case where the XR space is shared by a plurality of users, the space control unit makes the physical laws applied to the virtual object common between the users.
(17) The information processing apparatus according to any one of (1) to (16), in which
   the space control unit sets presence or absence of application of physical laws, a type of physical laws to be applied, or a condition for applying physical laws, for each virtual object or for each type of the virtual object.
(18) The information processing apparatus according to any one of (1) to (17), in which
   the space control unit controls a behavior of the virtual object on the basis of the physical laws to be applied in the XR space.
(19) An information processing method including:
   by an information processing apparatus,
   recognizing a state of an element related to XR; and
   controlling physical laws applied to a virtual object in an XR space on the basis of the state of the element related to the XR.

Note that the effects described herein are merely examples and are not limited, and other effects may be provided.

### REFERENCE SIGNS LIST

- 101: XR system
- 111: Information processing apparatus
- 112: Terminal apparatus
- 113, 113a, 113b: Controller device
- 202: Control unit
- 203: Display unit
- 211: Information processing unit
- 221: Recognition unit
- 222: Operation control unit
- 223: Space control unit
- 224: Audio control unit
- 225: Tactile presentation control unit
- 226: Learning unit
- 252: Sensing unit
- 253: Control unit
- 254: Display unit
- 255: Audio output unit
- 301: Ring portion
- 301A: Hole
- 302a: Operation portion
- 302b: Holding portion
- 312a, 312b: Upper surface
- 313: Bottom surface
- 331 to 334: Operation member
- 351: Marker
- 371 to 372b: Tactile device
- 401: Camera

## Claims

1. An information processing apparatus comprising:
a recognition unit that recognizes a state of an element related to cross reality (XR); and
a space control unit that controls physical laws applied to a virtual object in an XR space on a basis of the state of the element related to the XR.

2. The information processing apparatus according to claim 1, wherein
the state of the element related to the XR includes at least one of a state of the XR space or a state of a user who uses the XR space, and
the space control unit controls the physical laws applied to the virtual object on a basis of at least one of the state of the XR space or the state of the user.

3. The information processing apparatus according to claim 2, wherein
the state of the XR space includes at least one of a state and an attribute of the virtual object in the XR space or a virtual background in the XR space, and
the space control unit controls the physical laws applied to the virtual object on a basis of at least one of the state and the attribute of the virtual object in the XR space or the virtual background.

4. The information processing apparatus according to claim 3, wherein
the state of the virtual object includes at least one of an operation method for the virtual object or a position of the virtual object in the XR space, and
the space control unit controls the physical laws applied to the virtual object on a basis of at least one of the operation method for the virtual object or the position of the virtual object in the XR space.

5. The information processing apparatus according to claim 4, wherein
the operation method for the virtual object includes at least one of a type, an attribute, or a use method of a tool used for operating the virtual object, and
the space control unit controls the physical laws applied to the virtual object on a basis of at least one of the type, the attribute, or the use method of the tool.

6. The information processing apparatus according to claim 5, wherein
the tool is a real tool or a virtual tool.

7. The information processing apparatus according to claim 6, wherein
the real tool includes a real input device,
a use method of the tool includes how to hold the input device, and
the space control unit controls the physical laws applied to the virtual object on a basis of how to hold the input device.

8. The information processing apparatus according to claim 7, wherein
the input device includes
a ring portion into which a finger is inserted,
an operation portion that is operable by the finger inserted into the ring portion, and
a holding portion that is held by a palm in a case where the operation portion is operated by the finger.

9. The information processing apparatus according to claim 6, wherein
the space control unit applies the physical laws corresponding to the virtual tool to the virtual object.

10. The information processing apparatus according to claim 6, further comprising:
a learning unit that learns physical laws applied to the virtual tool with respect to a user on a basis of a use history of the user with respect to the virtual tool.

11. The information processing apparatus according to claim 2, wherein
the state of the user includes at least one of a position, an action, or a gesture of the user, and
the space control unit controls the physical laws applied to the virtual object on a basis of at least one of the position, the action, or the gesture of the user.

12. The information processing apparatus according to claim 1, wherein
the space control unit switches between a mode in which the physical laws are applied to the virtual object and a mode in which the physical laws are not applied to the virtual object, on a basis of the state of the element related to the XR.

13. The information processing apparatus according to claim 12, wherein
the space control unit suggests that a user switch the mode in a case where a condition for switching the mode is satisfied, and controls switching of the mode according to selection of the user.

14. The information processing apparatus according to claim 1, wherein
the space control unit distinguishes between a display mode of the virtual object to which the physical laws are applied and a display mode of the virtual object to which the physical laws are not applied in the XR space.

15. The information processing apparatus according to claim 1, wherein
the space control unit does not apply at least a part of the physical laws to the virtual object in a predetermined area of the XR space.

16. The information processing apparatus according to claim 1, wherein
in a case where the XR space is shared by a plurality of users, the space control unit makes the physical laws applied to the virtual object common between the users.

17. The information processing apparatus according to claim 1, wherein
the space control unit sets presence or absence of application of physical laws, a type of physical laws to be applied, or a condition for applying physical laws, for each virtual object or for each type of the virtual object.

18. The information processing apparatus according to claim 1, wherein
the space control unit controls a behavior of the virtual object on a basis of the physical laws to be applied in the XR space.

19. An information processing method comprising:
by an information processing apparatus,
recognizing a state of an element related to XR; and
controlling physical laws applied to a virtual object in an XR space on a basis of the state of the element related to the XR.
